Europäisches Patentamt

European Patent Office

Office européen des brevets

(19)

(11) **EP 0 937 232 B1**

(12) **EUROPEAN PATENT SPECIFICATION**

(45) Date of publication and mention
of the grant of the patent:
**11.02.2004 Bulletin 2004/07**

(21) Application number: **97939640.5**

(22) Date of filing: **28.08.1997**

(51) Int Cl.[7]: **G01G 3/14**, G01G 3/13

(86) International application number:
**PCT/US1997/015199**

(87) International publication number:
**WO 1998/015803 (16.04.1998 Gazette 1998/15)**

(54) **ELECTRONIC WEIGHING APPARATUS UTILIZING SURFACE ACOUSTIC WAVES**

ELEKTRONISCHE WÄGEVORRICHTUNG MIT AKUSTISCHEN OBERFLÄCHENWELLEN

APPAREIL DE PESAGE ELECTRONIQUE UTILISANT DES ONDES ACOUSTIQUES DE SURFACE

(84) Designated Contracting States:
**AT BE CH DE DK ES FR GB IE IT LI NL**

(30) Priority: **07.10.1996 US 729752**

(43) Date of publication of application:
**25.08.1999 Bulletin 1999/34**

(73) Proprietor: **Circuits and Systems, Inc.
East Rockaway, NY 11518 (US)**

(72) Inventors:
 • **KATS, Vyacheslav D.
 Brooklyn, NY 11219 (US)**
 • **GORDON, Arnold, S.
 Woodmere, NY 11598 (US)**

(74) Representative: **Gibson, Stewart Harry
URQUHART-DYKES & LORD,
Three Trinity Court,
21-27 Newport Road
Cardiff CF2 1AA (GB)**

(56) References cited:
US-A- 4 096 740      US-A- 4 107 626
US-A- 4 294 321      US-A- 4 623 813
US-A- 4 858 145      US-A- 5 476 002
US-A- 5 663 531

 • MASAHIRO ISHIDO ET AL: "DISPLACEMENT MEASUREMENT BU SAW DELAY-LINE OSCILLATOR CONSISTING OFTWO LINBO3 PLATES WITH IDT" IEEE TRANSACTIONS ON INSTRUMENTATION AND MEASUREMENT,US,IEEE INC. NEW YORK, vol. IM-36, no. 1, 1 March 1987 (1987-03-01), pages 83-86, XP000074911 ISSN: 0018-9456
 • BOWERS W D ET AL: "A 200 MHZ SURFACE ACOUSTIC WAVE RESONATOR MASS MICROBALANCE" REVIEW OF SCIENTIFIC INSTRUMENTS,US,AMERICAN INSTITUTE OF PHYSICS. NEW YORK, vol. 62, no. 6, 1 June 1991 (1991-06-01), pages 1624-1629, XP000235656 ISSN: 0034-6748

## Description

BACKGROUND OF THE INVENTION

1. Field of the Invention

The invention relates to electronic weighing devices. More particularly, the invention relates to an electronic weighing device which employs surface acoustic waves to measure weight.

2. State of the Art

Precision electronic weighing devices are widely known in the art and there are many different technologies utilized in these electronic weighing devices. Laboratory scales or "balances" typically have a capacity of about 1,200 grams and a resolution of about 0.1 gram, although scales with the same resolution and a range of 12,000 grams are available. The accuracy of these scales is achieved through the use of a technology known as magnetic force restoration. Generally, magnetic force restoration involves the use of an electromagnet to oppose the weight on the scale platform. The greater the weight on the platform, the greater the electrical current needed to maintain the weight. While these scales are very accurate (up to one part in 120,000), they are expensive and very sensitive to ambient temperature. In addition, their range is relatively limited.

Most all other electronic weighing devices use load cell technology. In load cell scales, the applied weight compresses a column which has strain gauges bonded to its surface. The strain gauge is a fine wire which undergoes a change in electrical resistance when it is either stretched or compressed. A measurement of this change in resistance yields a measure of the applied weight. Load cell scales are used in non-critical weighing operations and usually have a resolution of about one part in 3,000. The maximum resolution available in a load cell scale is about one part in 10,000 which is insufficient for many critical weighing operations. However, load cell scales can have a capacity of several thousand pounds.

While there have been many improvements in electronic weighing apparatus, there remains a current need for electronic weighing apparatus which have enhanced accuracy, expanded range, and low cost.

The paper "Displacement measurement by SAW delay-line oscillator consisting of two $LiNbo_3$ plates with IDT" in IEEE Transactions on Instrumentation and Measurement, vol. IM-36,no.1, 1st March 1987 (pages 83-86) discloses an electronic weighing apparatus in which first and second piezoelectric transducers, respectively having a SAW transmitter and a SAW receiver, move relative to each other according to a load placed on an elastic member of the apparatus: the SAW transmitter and receiver are interconnected with an amplifier to form an oscillator, the operating frequency of which changes according to relative displacement of the two transducers and therefore indicates the weight of the load.

US-A-4,107,626 and US-A-4,623,813 disclose electronic weighing apparatus having a SAW transmitter and a SAW receiver mounted on the surface of a member which deflects according to an applied load, the transmitter and receiver being interconnected with an amplifier to form an oscillator. US-A-5,476,002 discloses a contamination monitor which includes SAW transducers mounted to a heat sink.

## SUMMARY OF THE INVENTION

In accordance with the present invention there is provided an electronic weighing apparatus, comprising:

> a) a displaceable elastic member means for receiving a load and being displaced by the load such that the displacement of said elastic member means is related to the weight of the load;
> b) a first piezoelectric transducer having a first surface acoustic wave (SAW) transmitter;
> c) a second piezoelectric having a first SAW receiver said second piezoelectric transducer being mounted in close proximity to said first piezoelectric transducer with at least one of said first and second piezoelectric transducers being coupled to said elastic member means;
> d) a first amplifier having an input and an output, said input of said first amplifier being coupled to said first SAW receiver and said output of said first amplifier being coupled to said first SAW transmitter such that said first piezoelectric transducer said first amplifier and said second piezoelectric transducer form a first oscillator having a first output frequency; and
> e) processor means coupled to said output of said first amplifier, wherein displacement of one of said first and second piezoelectric transducers relative to the other and thereby changes said first output frequency, and said first output frequency is used by said processor means to determine an indication of the weight of the load;

the apparatus being characterized in that at least one of said first and second piezoelectric transducers (20,22) comprises a substrate provided with anti-reflection structure to minimise reflection of surface acoustic waves, said anti-reflection structure consisting of a surface damper (320d) on said substrate, an angled cut (120c) on an end of said substrate, or a rounded end (220c) on said substrate.

In accord with these objects which will be discussed in detail below, the electronic weighing apparatus of the present invention includes a base which supports a cantilevered elastic member upon which a load platform is mounted. In a first embodiment, the free end of the elastic member is provided with a first piezoelectric transducer and a second piezoelectric transducer is supported by the base. In a second, presently preferred embodiment, the interior of the elastic member is hollowed and is provided with first and second piezoelectric transducers which are mounted on respective opposed posts. In both embodiments, each transducer includes a substantially rectangular piezoelectric substrate and a pair of electrodes acting as a transmitter and the other pair of electrodes acting as a receiver. The transducers are arranged with their substrates substantially parallel to each other with a small gap between them and with their respective electrodes in relatively opposite positions. The receiver electrodes of the second transducer are coupled to the input of an amplifier and the output of the amplifier is coupled to the transmitter electrodes of the first transducer. The transducers form a "delay line" and the resulting circuit of the delay line and the amplifier is a positive feedback loop, i.e. a natural oscillator. More particularly, the output of the amplifier causes the first transducer to emit a surface acoustic wave ("SAW") which propagates along the surface of the first transducer substrate away from its electrodes. The propagating waves in the first transducer induce an oscillating electric field in the substrate which in turn induces similar SAW waves on the surface of the second transducer substrate which propagate in the same direction along the surface of the second transducer substrate toward the electrodes of the second transducer. The induced waves in the second transducer cause it to produce an alternating voltage which is supplied by the electrodes of the second transducer to the amplifier input. The circuit acts as a natural oscillator, with the output of the amplifier having a particular frequency which depends on the physical characteristics of the transducers and their distance from each other, as well as the distance between the respective electrodes of the transducers.

According to the invention, when a load is applied to the load platform, the cantilevered elastic member moves or bends and causes the first transducer to move relative to the second transducer. The movement of the first transducer relative to the second transducer causes a change in the frequency at the output of the amplifier. The movement or bending of the elastic member is proportional to the weight of the applied load and the frequency and/or change in frequency at the output of the amplifier can be calibrated to the displacement of the elastic member.

Many different embodiments relating to preferred aspects of the invention are disclosed. Among other things, the embodiments provide for: accounting for different modes of oscillation of the frequency response of the delay line, and accounting for temperature gradients in the system.

The provided apparatus can achieve an accuracy on the order of at least one part in one hundred thousand, e.g. one gram per hundred kilograms. The components of the apparatus are easily manufactured and the assembly of the apparatus is inexpensive. The circuit which is coupled to the outputs of the amplifiers may be provided with self-calibration capability and can be provided with a user-friendly interface so that the apparatus is easy to use.

Additional objects and advantages of the invention will become apparent to those skilled in the art upon reference to the detailed description taken in conjunction with the provided figures.

BRIEF DESCRIPTION OF THE DRAWINGS

Figure 1 is a side elevation view of a first exemplary embodiment of the invention;

Figure 1a is a side elevation view of a second exemplary embodiment of the invention;

Figure 2 is an enlarged broken side elevation and partially schematic view of a pair of transducers of Figs. 1 or 1a coupled in a feedback circuit;

Figure 2a is an enlarged plan and partially schematic view of a first transducer;

Figure 2b is an enlarged plan and partially schematic view of a second transducer,

Figure 3 is a graph of a portion of a frequency response curve for a delay line according to the invention showing three modes of oscillation;

Figure 3a is a graph similar to Figure 3 showing four modes of oscillation at points just prior to a mode change;

Figure 3b is a graph similar to Figure 3 showing four modes of oscillation at points just subsequent to a mode change;

Figure 4 is a graph of a periodic function representing the output of a first amplifier;

Figure 4a is a graph representing the output of a complementary pick-up;

Figure 4b is a graph of a periodic function representing the output of a second amplifier;

Figure 5 is an enlarged plan and partially schematic view of two pair of complementary transducers according to another embodiment of the invention;

Figure 6 is a block diagram of a circuit for determining the displacement of the transducers and thus the weight applied to the elastic member; and

Figure 7 is a top plan view of another embodiment of the invention utilizing four elastic members.

Figure 8a is an enlarged schematic plan view of a transducer having a first anti-reflection structure according to the invention;

Figure 8b is an enlarged schematic side elevation view of a transducer having a second anti-reflection structure according to the invention;

Figure 8c is an enlarged schematic side elevation view of a transducer having a third anti-reflection structure according to the invention;

Figure 9 is an enlarged schematic side elevation view of an overlapping transducer system having anti-reflection structure according to the invention;

Figure 10 is an enlarged schematic side elevation view of an overlapping differential transducer system according to the invention, incorporating anti-reflection structure and thermal sinks;

Figure 10a is an enlarged schematic plan view of one pair of transducers of the system of Figure 10;

Figure 10b is an enlarged schematic plan view of the other pair of transducers of the system of Figure 10;

Figure 11 is an enlarged schematic side elevation view of a differential transducer system according to the invention, incorporating a split second channel;

Figure 11a is an enlarged schematic plan view of one pair of transducers of the system of Figure 11;

Figure 11b is an enlarged schematic plan view of the other pair of transducers of the system of Figure 11;

Figure 12 is an enlarged schematic plan view of the first part of a differential transducer system having two pair of separate thermal transducer-channels;

Figure 13 is an enlarged schematic plan view of the second part of a differential transducer system having two pair of separate thermal transducer channels;

Figure 14 is a schematic transparent view of the transducers of Figures 12 and 13 in an operative alignment;

Figure 15 is an enlarged schematic side elevation view of a transducer system having a thermal transducer located in the same acoustic channel as the displacement transducers and an example of a circuit for the same;

Figure 16 is an enlarged schematic plan view of the first part of the transducer system of Figure 15;

Figure 17 is an enlarged schematic plan view of the second part of the transducer system of Figure 15;

Figure 18 is an enlarged schematic side elevation view of a differential transducer system having two transducers sharing the same acoustic channel;

Figure 19 is an enlarged schematic plan view of the first part of the transducer system of Figure 18;

Figure 20 is an enlarged schematic plan view of the second part of the transducer system of Figure 18;

Figures 21-26 are a graphs of a portion of a frequency response curve for a delay line according to the invention showing modes of oscillation and phase shifting according to the invention; and

Figure 27 is a schematic diagram of a positive feedback loop with phase shifting according to the invention.

## DETAILED DESCRIPTION OF THE PREFERRED EMBODIMENTS

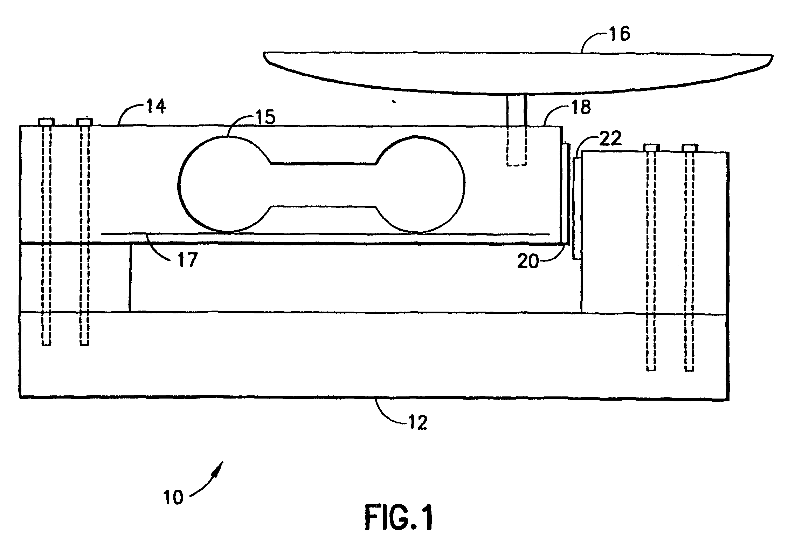

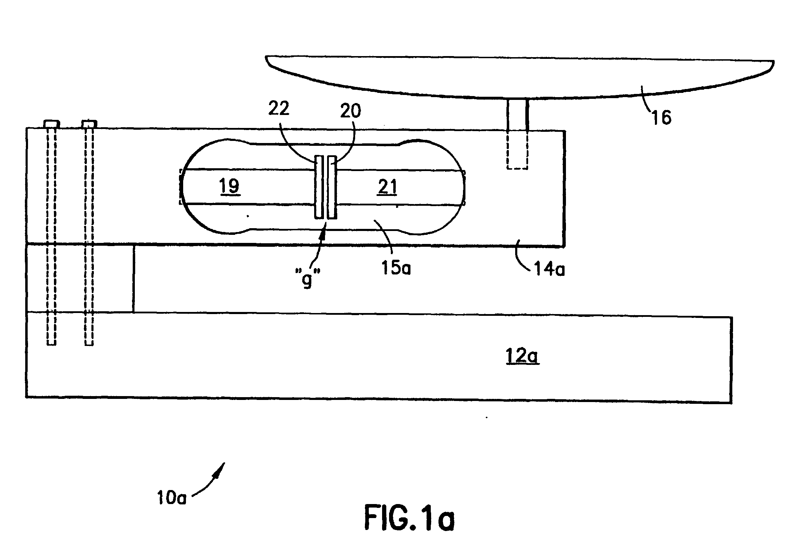

Referring to Figure 1, a first embodiment of an electronic weighing apparatus 10 according to the invention includes a base 12 which supports a cantilevered elastic member 14 having a cut-out 15, and upon which a load platform 16 is mounted. The free end 18 of the elastic member is provided with a first piezoelectric transducer 20 and a second piezoelectric transducer 22 is supported by the base 12. Optionally, as described in more detail below, the elastic member 14 is provided with a strain gauge 17 or other means of determining gross position.

A second, presently preferred embodiment of an electronic weighing apparatus 10a according to the invention is seen in Figure 1a to include a base 12a which supports a cantilevered elastic member 14a having a cut-out 15a, and upon which a load platform 16 is mounted. The cut-out 15a is provided with two opposed posts 19, 21 upon which are respectively mounted a first piezoelectric transducer 20 and a second piezoelectric transducer 22. The posts 19, 21 serve to locate the transducers 20, 22 at the center of the elastic member 14a and to mechanically couple the transducers to opposite ends of the elastic member 14a. It will be appreciated that locating the transducers at the center of the elastic member compensates for any torque on the member which would exhibit itself at the free end of the member. This results in an improved accuracy relative to the embodiment of Fig. 1. Depending on the application (e.g. maximum load to be weighed), the elastic member is made of aluminum or steel. The presently preferred elastic member exhibits a maximum displacement of 0.1 to 0.2 mm at maximum load.

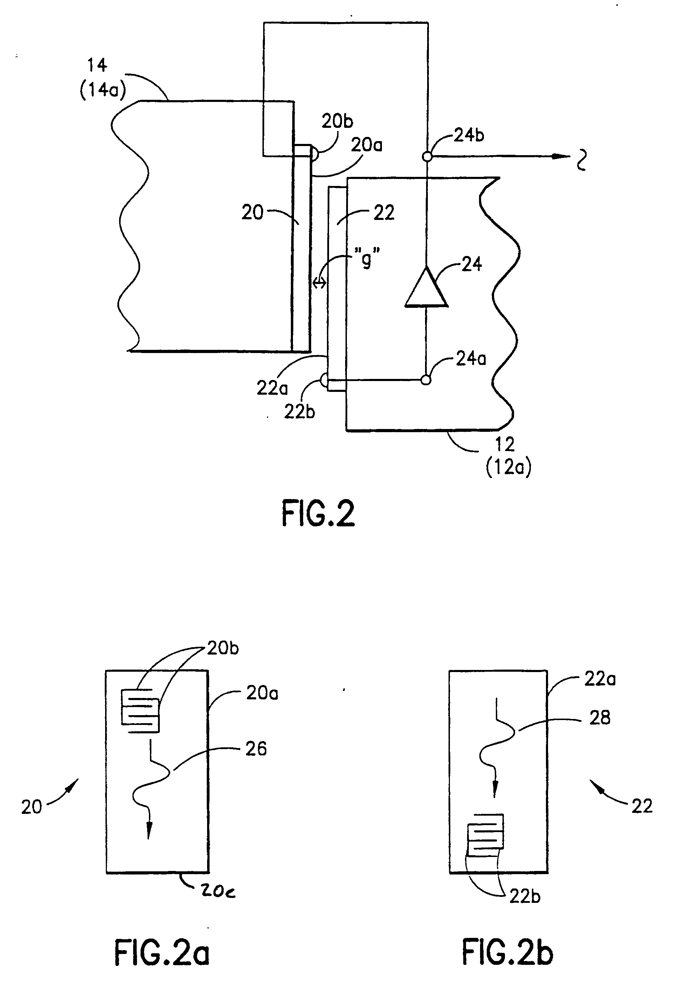

Turning now to Figures 2, 2a, and 2b in conjunction with Figs. 1 and 1a, the first transducer 20 includes a substantially rectangular piezoelectric substrate 20a and a pair of electrodes 20b imprinted on the substrate at the upper end thereof. The second transducer 22 includes a substantially rectangular piezoelectric substrate 22a and a pair of electrodes 22b imprinted on the substrate at the lower end thereof. The substrates are preferably made of lithium-niobate. The transducers are arranged with their substrates substantially parallel to each other with a small gap "g" between them. The electrodes 22b of the second transducer 22 are coupled to the input 24a of an amplifier 24 powered by a power source (not shown) and the output 24b of the amplifier 24 is coupled to the electrodes 20b of the first transducer 20. The resulting circuit is a positive feedback loop natural oscillator, a "delay line". The output 24b of the amplifier 24 generates an alternating voltage in the electrodes 20b of the first transducer 20 which generates a surface acoustic wave ("SAW") 26 which propagates along the surface of the first transducer substrate 20a away from its electrodes 20b. Since the substrate 20a of the first transducer 20 is relatively close to the substrate 22a of the second transducer 22, an oscillating electric field which is induced as a result of the SAW waves 26 in the piezoelectric substrate 20a is able to in turn induce similar SAW waves 28 on the surface of the second transducer substrate 22a which propagate in the same direction along the surface of the second transducer substrate toward the electrodes 22b of the second transducer 22. The induced waves 28 in the second transducer 22 cause the electrode 22b of the second transducer 22 to produce an alternating voltage which is provided to the input 24a of the amplifier 24. As long as the gain of the amplifier 24 is larger than the loss of the system, the circuit acts as a natural oscillator with the output 24a of the amplifier 24 having a particular frequency which depends on the physical characteristics of the transducers and their distance from each other, as well as the distance between the respective electrodes of the transducers. In particular, the frequency of the oscillator is directly related to the time it takes for the SAW to propagate from the electrodes 20b to the electrodes 22b.

According to a presently preferred embodiment of the invention, the SAW 26 has a wavelength of approximately 100-200 microns at 20-50 MHz. In order to limit loss in the system, the gap "g" between the substrates of the first and second transducers is as small as possible and preferably no more than one half to one wavelength, i.e. 100-200 microns; and even more preferably, no more than 0.1 wavelength. With such a gap, an oscillating system can typically be generated if the amplifier 24 has a gain of at least approximately 17 dB.

Referring now to Figures 1, 1a, 2, 2a, and 2b, it will be appreciated that when a load (not shown) is applied to the load platform 16, 16a, the free end of the cantilevered elastic member 14 moves down and causes the first transducer 20 to move relative to the second transducer 22. In particular, it causes the electrodes 20b of the first transducer 20 to move closer to the electrodes 22b of the second transducer 22. This results in a shortening of the "delay line". The shortening of the delay line causes an increase in the frequency at the output of the amplifier. The displacement of the elastic member is proportional to the weight of the applied load and the frequency or increase in frequency at the output of the amplifier can be calibrated to the distance moved by the elastic member.

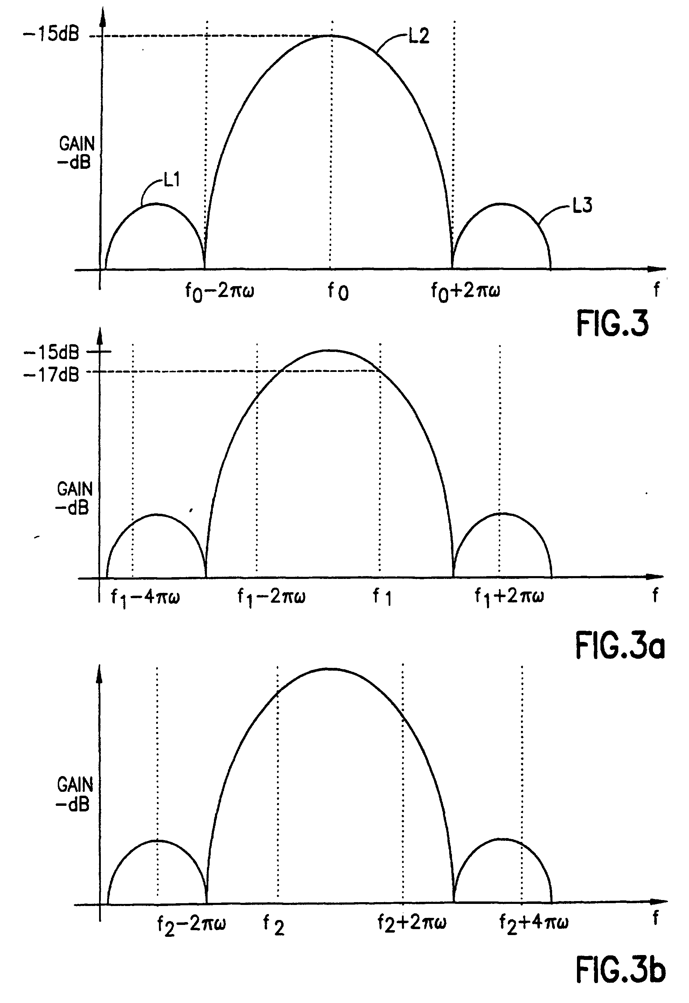

Turning now to Figures 3, 3a, and 3b, the frequency response of the delay line is represented by a series of lobes, e.g. L1, L2, and L3 which represent possible frequencies of oscillation of the oscillator circuit, i. e. where the gain is greater than the loss. The central or main lobe L2 includes the frequencies at which the oscillator has the lowest loss. The frequency $f_0$ is the frequency in the main lobe L2 where the circuit has the minimum loss. Since the frequency response curve is divided into these lobes, it will be understood that there are some frequencies at which the circuit will not oscillate. Moreover, it will be appreciated that the circuit will attempt to oscillate at the frequency having the least loss and that the frequency of oscillation may change modes to achieve the lowest loss. The different modes of oscillation are frequencies which have a phase shift of multiples of $2\pi$. For example, three modes of oscillation, $f_0$, $f_0+2\pi\omega$ and $f_0-2\pi\omega$, are shown in Figure 3, where w is a constant. Since the loss in frequency response among these modes is the lowest at the frequency $f_0$, the oscillator will oscillate at $f_0$.

As mentioned above, as the distance in the delay line is shortened, the frequency of the oscillator increases. For example, when the first transducer 20 is moved under the influence of a load applied to the elastic member 14 (Figure 1), the frequency of the oscillator will rise from $f_0$ (Figure 3) to $f_1$ (Figure 3a). At this new frequency $f_1$, the frequency response of the delay line exhibits many modes of oscillation, four of which, $f_1$, $f_1+2\pi\omega$, $f_1-2\pi\omega$, and $f_1-4\pi\omega$, are shown in Figure 3a. As shown in Figure 3a, $f_1$ is the frequency of the mode with the lowest loss; but the loss at the mode having the frequency $f_1-2\pi\omega$ is almost as low as the mode having the frequency $f_1$. If the delay line is shortened further by increasing the load on the elastic member, the frequency of the oscillator will increase beyond the frequency $f_1$ to a frequency $f_2+2\pi\omega$ shown in Figure 3b. Referring to Figure 3b, it will be appreciated that when the frequency of the oscillator is brought to $f_2+2\pi\omega$, many nodes of oscil-

lation are possible, including: $f_2$, $f_2+2\pi\omega$, $f_2-2\pi\omega$, and $f_2+4\pi\omega$. It will also be appreciated from Figure 3b that the loss in response at the mode having the frequency $f_2$ is less than the loss at the mode having the frequency $f_2+2\pi\omega$. The oscillator will therefore change modes of oscillation and oscillate at a lower frequency, i.e. $f_2$.

If desired, the changing of the modes of oscillation can be avoided by limiting the displacement of the first transducer so that the frequency of the oscillator is never brought beyond the frequency at which the mode of oscillation would change. By designing the delay line to exhibit an appropriate frequency response, it is possible to allow the length of the delay line to change by up to one wavelength before the mode of oscillation changes. In the example given above, the length of the delay line could be shortened by about 200 microns, i. e. the elastic member could be displaced by about 200 microns without causing a change in the mode of oscillation. Such a small displacement would either limit the range of weight measurement or would reduce the "resolution" (accuracy) of the measurement depending on the characteristics of the elastic member. For example, a "soft" elastic member could be used for measuring a small range of light weights, and a "stiff" elastic member could be used for measuring a broad range of weights with limited accuracy. According to the preferred embodiment of the invention, the length of the delay line is permitted to change by about 700 microns and the mode of oscillation is therefore permitted to change three to four times.

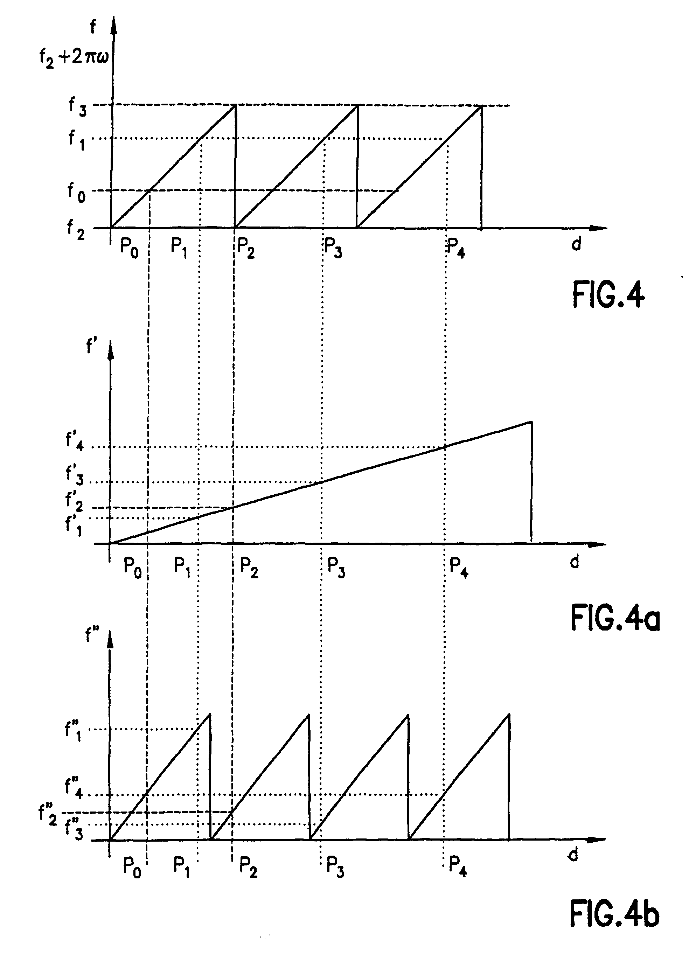

Figure 4 illustrates the frequency "f" of the output of the amplifier 24 as a function of displacement "d" of the elastic member 14. When the elastic member is displaced from a resting point $P_0$ to a first position $P_1$, the frequency of the amplifier output increases from a first frequency $f_0$ to a second frequency $f_1$. As mentioned above, due to the frequency response of the delay line, when the elastic member is displaced to a position $P_2$, the oscillator changes mode of oscillation and oscillates at a lower frequency $f_2$ rather than the higher frequency $f_2+2\pi\omega$. Eventually, the range of frequencies will repeat through $f_1$ at position $P_3$ until the mode changes again, etc. Thus, the frequency output of the amplifier will be a periodic function with the same frequencies generated at different displacements of the elastic member. For example, as shown in Figure 4, the same frequency $f_1$ will be representative of different displacement positions $P_1$, $P_3$, and $P_4$ of the elastic member 14.

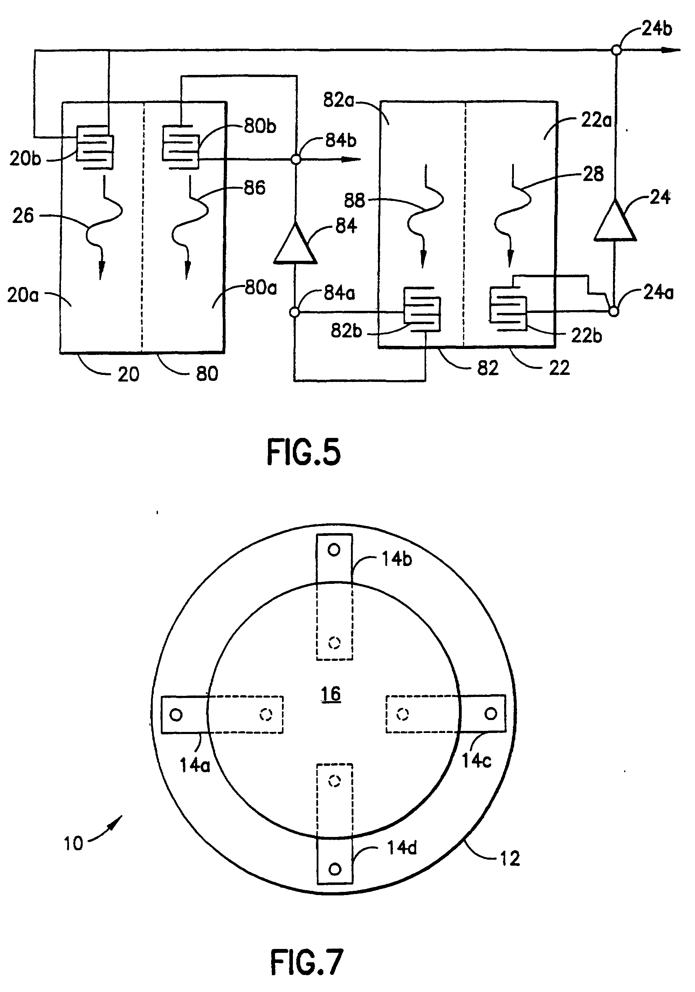

There are several ways of determining which of the positions $P_1$, $P_3$ or $P_4$ represents the true displacement of the elastic member when the frequency is $f_1$. For example, it is possible to monitor the output of the amplifier 24 and count the number of times the frequency drops and then rises and apply modular arithmetic to calculate the correct position of the elastic member. Alternatively, as suggested above and shown in Figure 1, the elastic member 14 can be provided with a gross displacement detector 17 such as a strain gauge, a capacitance or inductance transducer, or the like which generates a non-periodic output. Figure 4a illustrates the alternative method wherein a strain gauge or other "gross" position transducer is coupled to the elastic member to provide a non-periodic signal f' in response to the displacement of the elastic member. The signal f' need not represent a very accurate indication of the position of the elastic member. It is sufficient that the signal f' be accurate enough to determine how many cycles of the periodic function f' have been traversed. Thus, as shown in Figures 4 and 4a, when the elastic member is displaced to positions $P_1$, $P_3$ or $P_4$, three distinct signals $f'_1$, $f'_3$, and $f'_4$ are generated by the gross position transducer. Each cycle of the periodic signal f is represented by a range of signals f'. Therefore, by comparing the signal f' to a look-up table, the correct cycle of the function f can be determined and modular arithmetic with interpolation used to determine the correct displacement of the elastic member. According to a presently preferred embodiment (discussed below with reference to Fig. 5), however, a second periodic function f", as shown in Figure 4b, is generated and combined with or compared to the periodic function f as described in detail below.

Turning now to Figure 5, according to one embodiment of the invention, in order to determine the cycle of the periodic output of the amplifier 24, a second pair of transducers 80, 82 are provided adjacent to the first pair 20,22 and coupled to each other in the same type of delay line feedback loop via a second amplifier 84. The second pair of transducers generate and detect a SAW 86, 88 having a longer wavelength, e.g. 220 microns at 18 MHz, than the SAW 26, 28 utilized by the first pair of transducers. Therefore, the output 84b of the second amplifier 84 is a periodic function with a different frequency than the periodic function which is the output of the first amplifier 24.

As mentioned above, Figure 4b illustrates the periodic function f" of the output of the second amplifier 84. Comparing Figures 4 and 4b, it will be appreciated that for each position, e.g. $P_1$, $P_3$ and $P_4$, where the output of the first amplifier is the same value $f_1$, the output of the second amplifier will be a non-repeating value, i. e. $f''_1$, $f''_3$, and $f''_4$. By utilizing the outputs of both amplifiers, the exact displacement of the elastic member may be determined, i.e., the weight of the applied load can be determined using a look-up table for a particular elastic member. According to the presently preferred embodiment, the transducers 20 and 80 share the same substrate and generate respective SAWs in separate channels in the substrate. Similarly, the transducers 22 and 82 share the same substrate and receive SAWs in respective substrate channels. One preferred frequency of the first SAW wave is 20-22 MHz and a preferred frequency of the second SAW wave is 18-20 MHz.

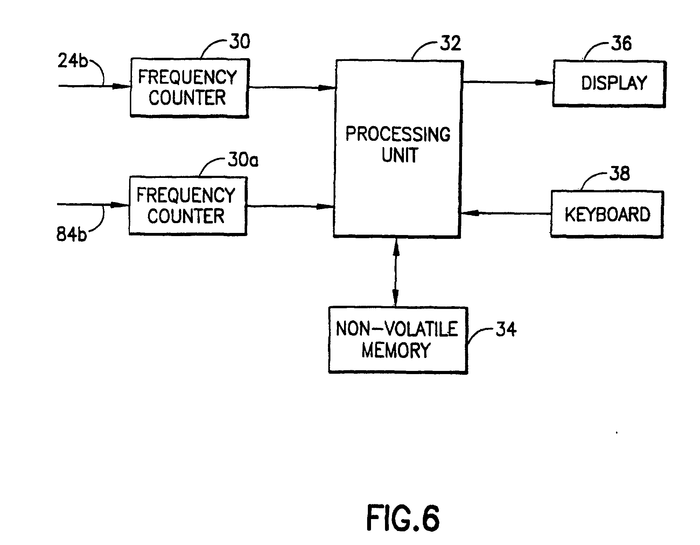

Figure 6 is a block diagram illustrating how the signals from the two amplifiers 24, 84 are used to indicate the weight of an object placed on the load platform. A first frequency counter 30 determines the frequency at the output 24b of the first amplifier and a second frequency counter 30a determines the frequency at the output 84b of the second amplifier. The frequency information is supplied to a processing unit 32 which is coupled to a non-volatile memory 34 which stores a look-up table. The frequency information is compared to the look-up table which returns a weight value and the processing unit displays that value on the display 36. The operation of the processing unit 32 may be controlled by a keyboard 38 which can also be used to calibrate the look-up table. The look-up table is typically calibrated by placing known weights on the load platform and entering the weight value(s) via the keyboard 38. The processing unit stores the weight values obtained from the keyboard with the frequency values obtained from the frequency counters in the form of a look-up table in the memory 34. Frequency values and corresponding weight values which are not stored in the look-up table are obtained by interpolating the values in the look-up table. Those skilled in the art will appreciate that the processing unit may include other functions for temperature compensation, compensation for non-linearity of the transducers/elastic member, conversion to different weight measurement units, etc. The display may be numeric, alpha-numeric, or graphical. It will also be appreciated that a single frequency counter may be used to determine the two frequencies consecutively rather than simultaneously, in which case, the processing unit will have means for switching between the amplifiers to obtain their frequencies separately. In addition, it will be understood that the look-up table may comprise one or several look-up tables.

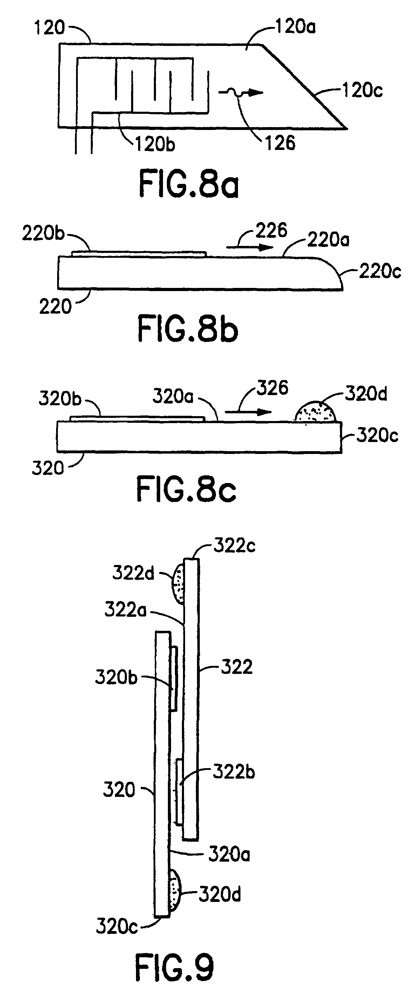

Those skilled in the art will understand that in all weighing devices, accuracy may be compromised by incorrect placement of the load on the load platform. This is particularly so when measuring large weights which can cause an elastic member to twist. Referring now to Figure 7, an embodiment of the weighing apparatus 10 may include a circular base 12 with four radially cantilevered elastic members 14a-14d supporting the load platform 16. Each elastic member will be provided with its own transducer circuit and the weights measured at each elastic member will be summed to obtain the correct weight of a load placed on the load platform. It will be understood that more than four or fewer than four elastic members may be used to obtain similar results.

It has been recognized by the inventors that reflected waves may occur on the substrate of the transmitting transducer which interfere with SAW wave generation and result in non-linearity of measurements. More particularly, when the wave 26 (Fig. 2a) propagates along the substrate 20a, it reaches the end 20c of the substrate and a portion of the wave is reflected back 180° toward the electrodes 20b. The reflected wave interferes with the propagated wave 26. In fact, a portion of the reflected wave is again reflected off the other end 20d of the substrate 20a causing additional interference.

Reflected waves can also be a problem in the receiving transducer. Figures 8a-8c show several anti-reflection structures according to the invention.

Turning now to Figure 8a, a transducer 120 according to the invention includes a piezoelectric substrate 120a and a pair of electrodes 120b for generating a SAW wave 126. According to the invention, the end 120c of the substrate 120a is cut at an angle relative to the propagation path of the SAW wave 126. Thus, when the wave 126 reaches the end 120c of the substrate, any reflection of the wave is at an angle relative to the line of propagation so that the reflected wave does not interfere with the propagated wave.

Turning now to Figure 8b, a transducer 220 according to the invention includes a piezoelectric substrate 220a and a pair of electrodes 220b for generating a SAW wave 226. According to the invention, the end 220c of the substrate 220a is rounded (e.g., by sandblasting) relative to the propagation path of the SAW wave 226. Thus, when the wave 226 reaches the end 220c of the substrate it is scattered rather than reflected back.

Turning now to Figure 8c, a transducer 320 according to the invention includes a piezoelectric substrate 320a and a pair of electrodes 320b for generating a SAW wave 326. According to the invention, a damper such as a soft elastomeric 320d is placed on the surface of the substrate adjacent the end 320c. Thus, when the wave 326 reaches the damper 320d, it is absorbed by the damper rather than reflected back.

Of the different anti-reflection structure described above, the damper material shown in Figure 8c appears to be the presently preferred structure. Accordingly, as shown in Figure 9, a pair of transducers 320, 322 are provided with damper material 320d, 322d adjacent ends 320c, 322c opposite electrodes 320b, 322b on the respective substrates 320a, 322a. The transducers 320, 322 are advantageously arranged in an overlapping manner as shown in Figure 9.

As mentioned above, in addition to problems associated with reflected waves, changes in temperature adversely affect the accuracy the weighing apparatus. It is known from the parent application that overall changes in ambient temperature may be compensated for by including a temperature sensor in the weighing apparatus and using a look-up table for appropriate temperature corrections. However, in addition to overall changes in ambient temperature, it has been discovered that temperature gradients can occur across the substrates of the transducers. More particularly, it has been discovered that the lithium niobate substrates have a temperature effect of about 70ppm per degree C. In a 20Mhz system, this results in a change of 1.4Khz per degree. In order to obtain the desired accuracy, the temperature difference between the transducers should be less than .01 degrees C. At 20Mhz, the full scale output for one mode is about 200Khz. Since the substrate shows a temperature effect of 1.4Khz per degree C, this results in a 0.7% variation of the full scale per degree C. In order to maintain an accuracy of within 0.007% of the full scale, therefore, the temperature difference should be less than 0.01 degree C.

Several aspects of the present invention combine to help overcome the effects of temperature on the accuracy of the weighing apparatus. Some of these aspects also enhance the overall accuracy of the apparatus regardless of temperature effects.

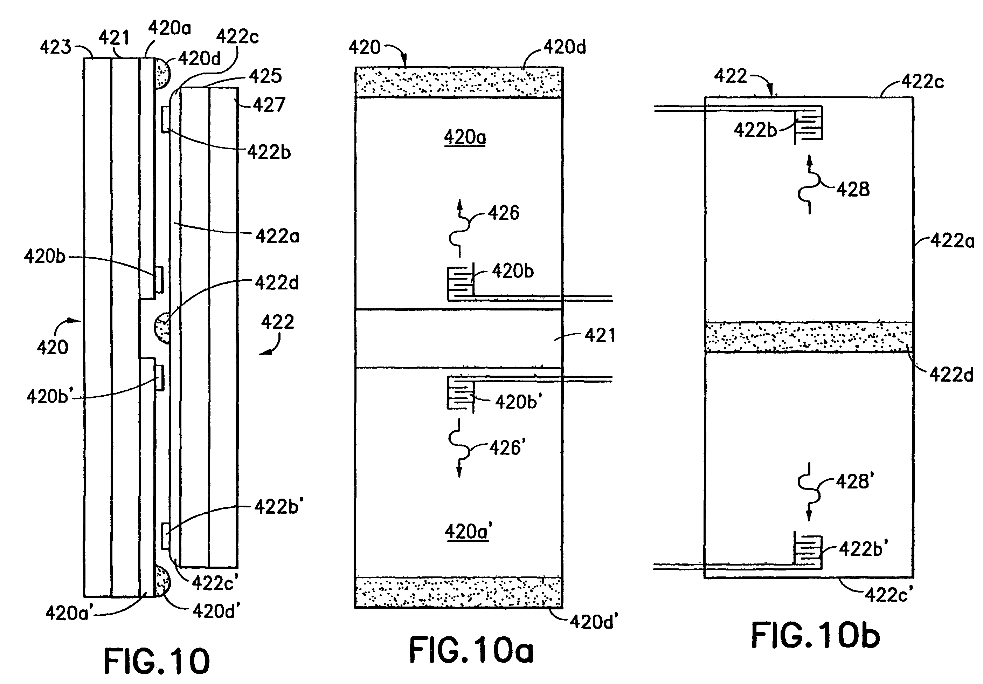

Figures 10, 10a, and 10b show a pair of transducers 420, 422 according to the invention which embody several aspects of the invention. Referring now to Figures 10, 10a, and 10b, the transducer system includes a transmitting transducer 420 and a receiving transducer 422. The transmitting transducer 420 includes two piezoelectric substrates 420a, 420a' which are mounted on one side a thermal sink 421, and a thermal insulator 423 is mounted on the other side of the thermal sink 421. The thermal sink 421 helps to maintain a constant temperature across both substrates 420a, 420a' and the thermal insulator 423 helps to prevent ambient temperature changes from affecting the temperature of the thermal sink 421 and thus the substrates 420a, 420a'. Each substrate 420a, 420a' has a pair of electrodes 420b, 420b' at one end thereof and a surface damper 420d, 420d' at the other end thereof. The substrates are arranged on the thermal sink so that their respective electrode pairs are close to each other and adjacent to the center of the transducer as seen best in Figures 6 and 7. The transmitting transducer 420, therefore generates two SAW waves 426, 426' which propagate in opposite directions from the approximate center of the transducer 420. The dampers 420d, 420d' serve to inhibit reflections of the SAW waves 426, 426'.

The receiving transducer 422 includes a piezoelectric substrate 422a which is mounted on one side of a thermal sink 425, and a thermal insulator 427 is mounted on the other side of the thermal sink 425. The thermal sink 425 helps to maintain a constant temperature across the substrate 422a and the thermal insulator 427 helps to prevent ambient temperature changes from affecting the temperature of the thermal sink 425 and thus the substrate 422a. The substrate 422a has two pairs of electrodes 422b, 422b', each pair being located approximately at opposite rounded ends 422c, 422c' of the substrate 422a, and a surface damper 422d is located approximately at the center of the substrate 422a. The receiving transducer 422, therefore receives two SAW waves 428, 428' which are induced respectively by the transmitted SAW waves 426, 426', and which propagate in opposite directions.

The electrode pairs 420b and 422b are coupled to one amplifier to form one delay line oscillator and the electrode pairs 420b' and 422b' are coupled to a second amplifier to form a second delay line oscillator. From the foregoing, it will be appreciated that when the transducers 420, 422 move relative to each other as described above with reference to Figures 1 and 1a, one of the delay line oscillators will increase in frequency and the other delay line oscillator will decrease in frequency by an equal amount. This "differential" transducer system provides several benefits. The effects of ambient temperature are automatically accounted for and the resolution of the displacement measurement is doubled.

For example, if the frequency of a delay line oscillator is $f_0$ at a predefined temperature, the frequency after a change in ambient temperature can be expressed as $f=f_0(1+k\Delta t)$, where k is a constant and $\Delta t$ is the change in ambient temperature. Similarly, if the frequency of a delay line oscillator is $f_0$ when no load is placed on the weighing apparatus, the frequency after the transmitter and receiver have been displaced by a load can be expressed as $f=f_0(1\pm g\Delta x)$, where g is a constant and $\Delta x$ is the displacement (positive or negative) due to a particular load. The combined change in frequency $\Delta f$ due to temperature and displacement, therefore equals $f_0(k\Delta t\pm g\Delta x)$.

Given the foregoing, it will be appreciated that the combined effects of temperature and displacement on the frequency of the delay line oscillators of Figures 10, 10a, and 10b can be expressed by the equations indicated below at (1) and (2) where f1 is the frequency of the oscillator which includes electrodes 420b, 422b and f2 is the frequency of the oscillator which includes electrodes 420b', 422b'.

$$\Delta f1 = f1_0 k\Delta t + f1_0 g\Delta x \tag{1}$$

$$\Delta f2 = f2_0 k\Delta t - f2_0 g\Delta x \tag{2}$$

The quantities $\Delta f1$, $\Delta f2$, $f1_0$, and $f2_0$, will therefore be known during any weight measurement and may be subjected to the cross product expressed below at (3).

$$(\Delta f1 \times f2_0) - (\Delta f2 \times f1_0) \tag{3}$$

By substituting equations (1) and (2) in expression (3), the expression listed below at (4) is obtained.

$$f2_0 f1_0 k\Delta t + f2_0 f1_0 g\Delta x - f1_0 f2_0 k\Delta t + f1_0 f2_0 g\Delta x \tag{4}$$

By combining terms, it will be appreciated that the effects of temperature will be canceled out of expression (4) and that expressions (3) and (4) can be expressed as the simplified equation listed below at (5).

$$(\Delta f1 \times f2_0) - (\Delta f2 \times f1_0) = 2 f1_0 f2_0 g\Delta x \tag{5}$$

It will therefore be appreciated that the differential transducer system described above, not only eliminates the affects of ambient temperature change from the weighing measurement, but also provides double the resolution scale of a single transducer system. Nevertheless, the system described with reference to Figures 10, 10a, and 10b will not automatically compensate for temperature gradients across the substrates of the transducer and that is why the transducer system is provided with the thermal sinks described above. It will also be appreciated that the overall length (height) of the transducer system is substantially doubled as compared with the non-differential system. In order to reduce the overall size of the transducer system and to increase the sensitivity and resolution of the system, the present invention preferably uses a frequency of approximately 50mhz as compared to the 20mhz frequency of the parent application. At this frequency, in order to achieve the desired accuracy (0.5grams per 10kg), the temperature difference between the substrates must be kept below .01 degrees C°.

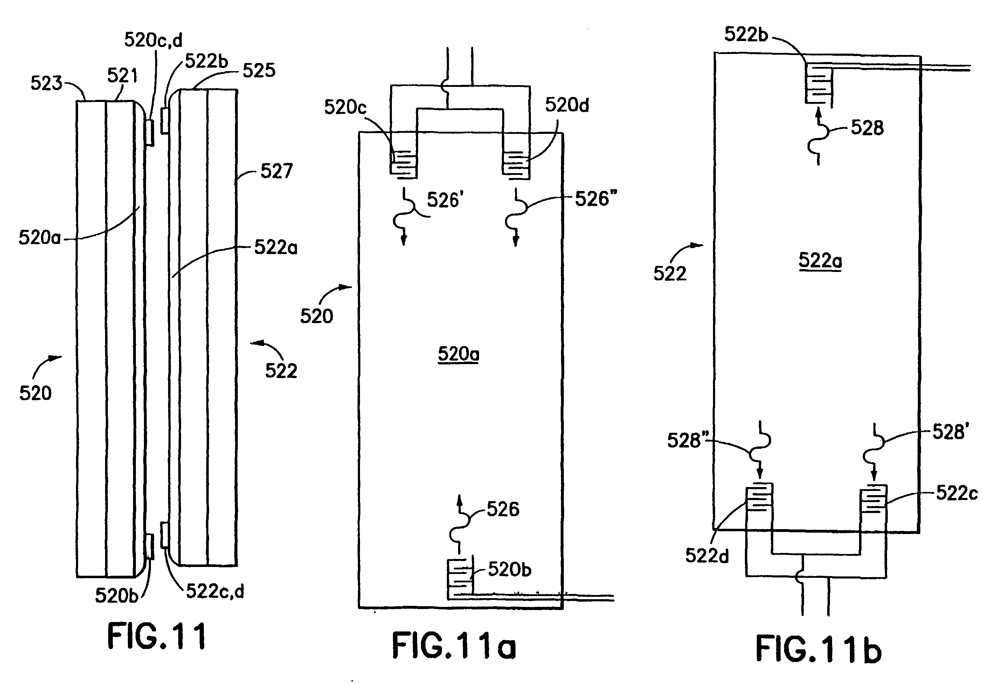

Figures 11, 11a, and 11b show a schematic illustration of a differential transducer system similar to the one described above, but with both transducer channels operating on the same substrate and with one of the transducer channels being split. Referring now to Figures 11, 11a, and 11b, the transducer system includes a transmitting transducer 520 and a receiving transducer 522. The transmitting transducer 520 includes a piezoelectric substrate 520a which is mounted on one side a thermal sink 521, and a thermal insulator 523 is mounted on the other side of the thermal sink 521. The thermal sink 521 helps to maintain a constant temperature across the substrate 520a and the thermal insulator 523 helps to prevent ambient temperature changes from affecting the temperature of the thermal sink 521 and thus the substrate 520a. A first transmitting electrode 520b is located at one end of the substrate 520a on a central axis thereof. A second transmitting electrode pair 520c, 520d is located at the other end of the substrate on opposite sides of the central axis. Each of the electrodes 520c, 520d is approximately half the wavelength of the electrode 520b and the electrodes 520c, 520d are coupled in parallel to form the electrode pair. The transmitting transducer 520, therefore generates three SAW waves 526, 526', and 526". The first SAW wave 526 propagates along a central channel on the substrate and in a first direction. The second and third SAW waves 526' and 526" propagate along two side channels on the substrate an in a direction opposite to the first SAW wave.

The receiving transducer 522 includes a piezoelectric substrate 522a which is mounted on one side of a thermal sink 525, and a thermal insulator 527 is mounted on the other side of the thermal sink 525. The thermal sink 525 helps to maintain a constant temperature across the substrate 522a and the thermal insulator 527 helps to prevent ambient temperature changes from affecting the temperature of the thermal sink 525 and thus the substrate 522a. The substrate 522a has a first receiving electrode 522b and a second receiving electrode pair 522c, 522d. The receiving electrode 522b is at one end of the substrate on a central axis thereof and the receiving electrodes 522c, 522d are located at the other end of the substrate on opposite sides of the central axis. The receiving electrodes 522c, 522d are half the wavelength of the electrode 522b and are coupled in parallel to each other. The receiving transducer 522, therefore receives three SAW waves 528, 528', and 528" which are induced respectively by the transmitted SAW waves 526, 526', 526".

The arrangement shown in Figures 11, 11a, and 11b has several advantages. The SAW wave propagation channels are closer together on the same substrate and therefore the temperature gradient between them will be smaller. The overall size of the transducer system is smaller. In addition, the transducers are axially symmetrical which enhances mechanical performance.

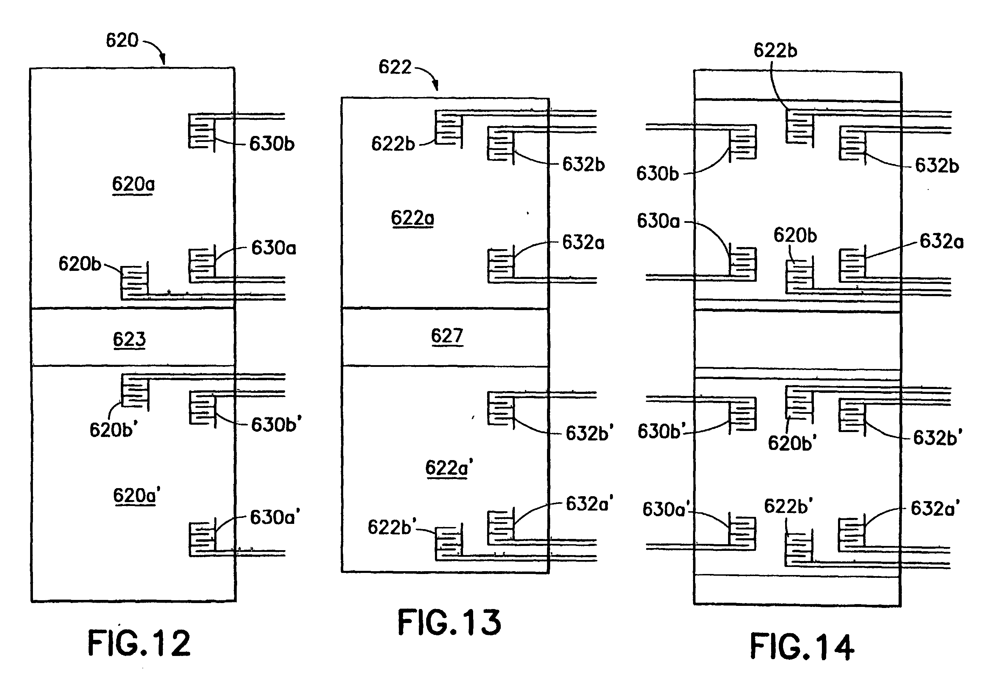

Figures 12-14 show a schematic illustration of a differential transducer system similar to the one described above, but with additional electronic means for measuring the temperature of the substrates. Referring now to Figures 12-14, a transmitting transducer 620 includes a first piezoelectric substrate 620a and a second piezoelectric substrate 620a', both of which are mounted on a base 623 which is preferably constructed as a sandwich of insulating and conductive materials as described above with reference to Figure 6. The first piezoelectric substrate 620a is provided with a first pair of transmitting electrodes 620b at a lower central portion thereof and the second piezoelectric substrate 620a' is provided with a second pair of transmitting electrodes 620b' at an upper central portion thereof. In addition, first piezoelectric substrate 620a is provided with two pair of electrodes 630a, 630b which are spaced apart from each other and arranged off center from the first pair of transmitting electrodes 620b. The electrodes 630a, 630b are respectively a transmitter and receiver which are used to measure the temperature of the substrate 620a as described below. Accordingly the substrate 620a' is also provided with two pair of temperature measuring electrodes 630a', 630b'.

A receiving transducer 622 includes a first piezoelectric substrate 622a and a second piezoelectric substrate 622a', both of which are mounted on a base 627 which is preferably constructed as a sandwich of insulating and conductive materials as described above with reference to Figure 6. The first piezoelectric substrate 622a is provided with a first pair of receiving electrodes 622b at an upper central portion thereof and the second piezoelectric substrate 622a' is provided with a second pair of transmitting electrodes 622b' at a lower central portion thereof. In addition, the first piezoelectric substrate 622a is provided with two pair of temperature measuring electrodes 632a, 632b which are spaced apart from each other and arranged off center from the first pair of transmitting electrodes 522b. The substrate 522a' is also provided with two pair of temperature measuring electrodes 632a', 632b'.

The transducer arrangement shown in Figures 12-14 incorporates several of the features of the transducer arrangement described above with reference to Figures 10, 10a, and 10b. The electrode pairs 620b, 620b', 622b, 622b' are arranged to provide a differential displacement measurement system as described above. In this regard, and with reference to Figure 14, it will be appreciated that the differential system utilizes two acoustic channels which are centrally located, one on the upper pair of substrates and the other on the lower pair of substrates. In addition, it will be appreciated that the transmitting substrates are slightly larger than the receiving substrates and therefore overlap the receiving substrates with the same advantages as described above. According to a presently preferred embodiment, the transmitting transducer 620 is approximately 45mm long and the space between the first and second substrates is approximately 5μm. The receiving transducer 622 is approximately 10mm shorter than the transmitting transducer and the space between the first and second receiving substrates is approximately 5μm.

As mentioned above, each of the four piezoelectric substrates is provided with a two pair of temperature measuring electrodes which are arranged as a fixed position delay line on each substrate. Each of the four sets of temperature measuring electrodes is coupled to a respective amplifier and thereby forms a natural oscillator which preferably oscillates at a frequency which is different from the frequency at which the displacement measuring oscillators oscillate. Since the temperature measuring electrode sets are stationary on their respective substrates, the frequency of their respective oscillators will vary only due to changes in temperature. With this provided arrangement, the temperature of each of the four substrates can be determined and accounted for when making displacement and weight measurements.

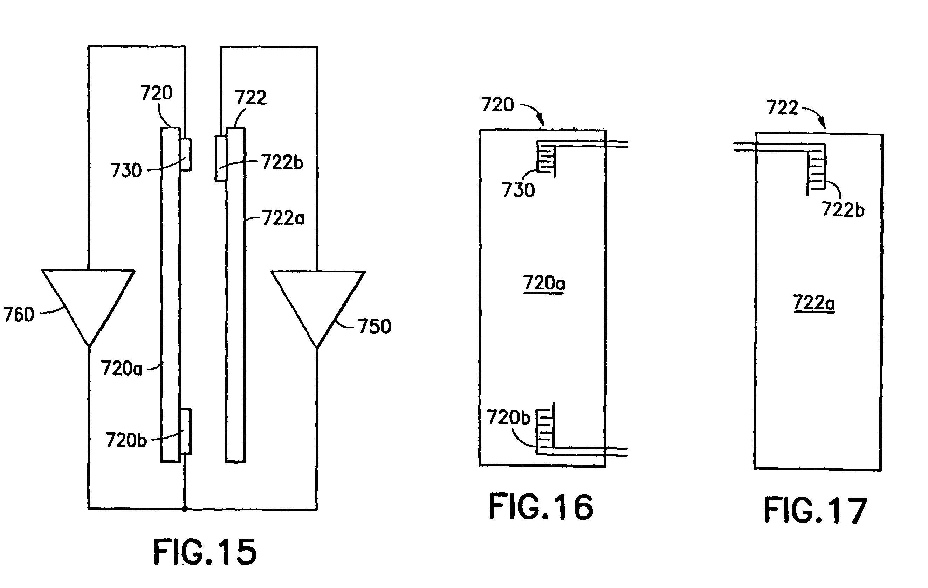

As seen in Figure 14, each of the two measuring electrode sets operates in a separate acoustic channel. It is possible, however, to provide two measuring electrode sets which operate in almost the same channel. This minimizes the thermal gradient between the two channels. Figures 15-17 illustrate one embodiment of such an arrangement.

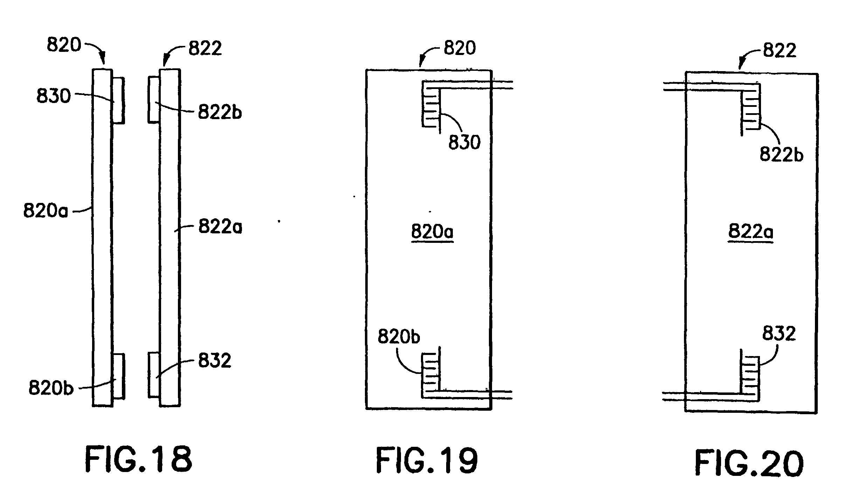

Turning now to Figures 15-17, a transmitting transducer 720 includes a piezoelectric substrate 720a with a pair of transmitting electrodes 720b located at a lower end thereof and a pair of receiving electrodes 730 located at an upper end thereof. A receiving transducer 722 includes a piezoelectric substrate 722a with a pair of receiving electrodes 722b at an upper end thereof. It will be appreciated that the transmitting and receiving electrodes 720b, 722b are arranged with amplifier 750 to form a delay line for measuring displacement and weight as described above. In addition, the receiving electrodes 730 on the transmitting substrate form a stationary delay line with amplifier 760 and the transmitting electrodes 720b for measuring the temperature of the transmitting substrate 720a. The amplifiers 750 and 760 may be operated simultaneously if the delay lines have significantly different frequencies. Alternatively, the amplifiers 750, 760 may be switched on and off alternatingly. It will be appreciated that all of the electrodes operate in the same acoustic channel. The transducer system shown in Figures 15-17 is a non-differential system wherein the temperature of the transmitting substrate is assumed to be close to that of the receiving substrate. However, it is possible to apply the technology of this system to a differential system wherein separate measurements are made for the two channels. Such a system is shown in Figures 18-20.

Turning now to Figures 18-20, a transmitting transducer 820 includes a piezoelectric substrate 820a with a pair of transmitting electrodes 820b located at a lower end thereof and a pair of transceiving electrodes 830 located at an upper end thereof. A receiving transducer 822 includes a piezoelectric substrate 822a with a pair of receiving electrodes 822b at an upper end thereof and a pair of transceiving electrodes 832 at a lower end thereof. It will be appreciated that the transmitting and receiving electrodes 820b, 822b are arranged to form a delay line for measuring displacement and weight as described above. In addition, the transceiving electrodes 830 and 832 can be used to form a stationary delay line with respective electrodes 820b, 822b or may be used with each other to form a displacement measuring delay line which is differential to the delay line formed by electrodes 820b, 822b. In operation, the four electrode pairs may be multiplexed such that at one moment, two differential displacement measuring delay lines are activated and at another moment two stationary temperature measuring delay lines are activated. In this manner, the temperature of each substrate can be ascertained prior to or even during temperature measurement. It will be appreciated that all of the electrodes operate in the same acoustic channel.

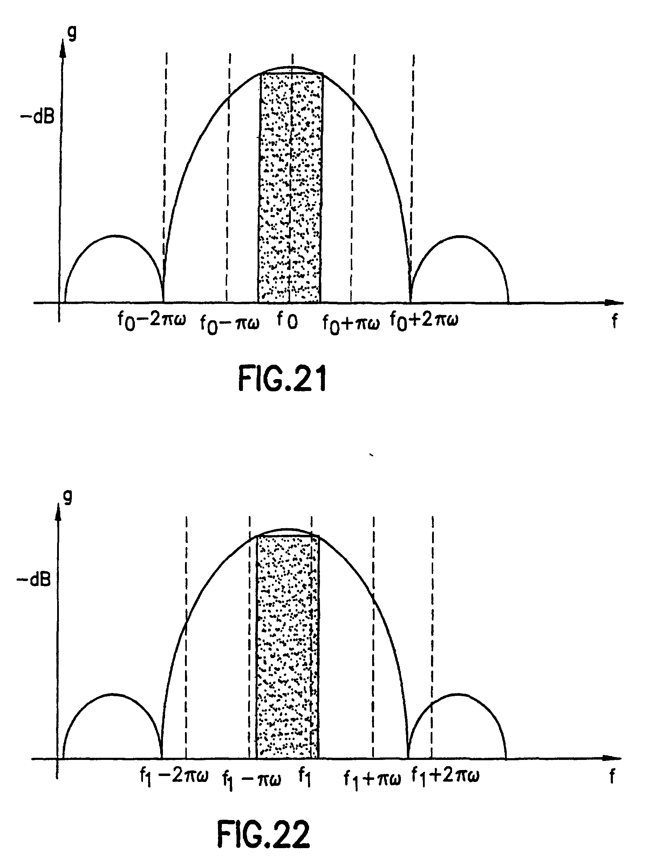

As mentioned above and in the parent application, the delay lines according to the invention may oscillate in more than one mode and within each mode, the gain will vary as the frequency changes. According to the invention, the phase of the oscillator may be shifted ±180° in order to increase gain (decrease loss). Figures 21-26 illustrate how the modes of oscillation change during weighing and how phase shifting can be used to increase gain.

Referring now to Figure 21, in the idle state, with no weight applied to the scale, the delay line will oscillate at a frequency "$f_0$" which is shown in Figure 21 as the point having the most gain (least loss). The optimal gain area of the graph of Figure 21 is shown in the shaded area surrounding $f_0$ and represents a range of ±100 Khz, for example. This area is considered optimal not only because it is the area of least loss, but because it is the area wherein the curve exhibits the least "nonlinearity" and is least influenced by temperature. As described in detail in the parent application, the delay line may oscillate in any of several modes and the modes are separated from each other by a phase difference of $2\pi$. In the example shown in Figure 21, the frequency $f_0$ has a lower mode $f_0-2\pi\omega$ and a higher mode $f_0+2\pi\omega$, where w is the interger one, the phase difference between the modes representing approximately 340Khz in this example. As weight is added to the scale, the delay line will oscillate at a higher frequency "$f_0+n$". For example, after adding a relatively small weight, the frequency of oscillation will rise to $f_0$ +70Khz which is shown in Figure 22 as $f_1$.

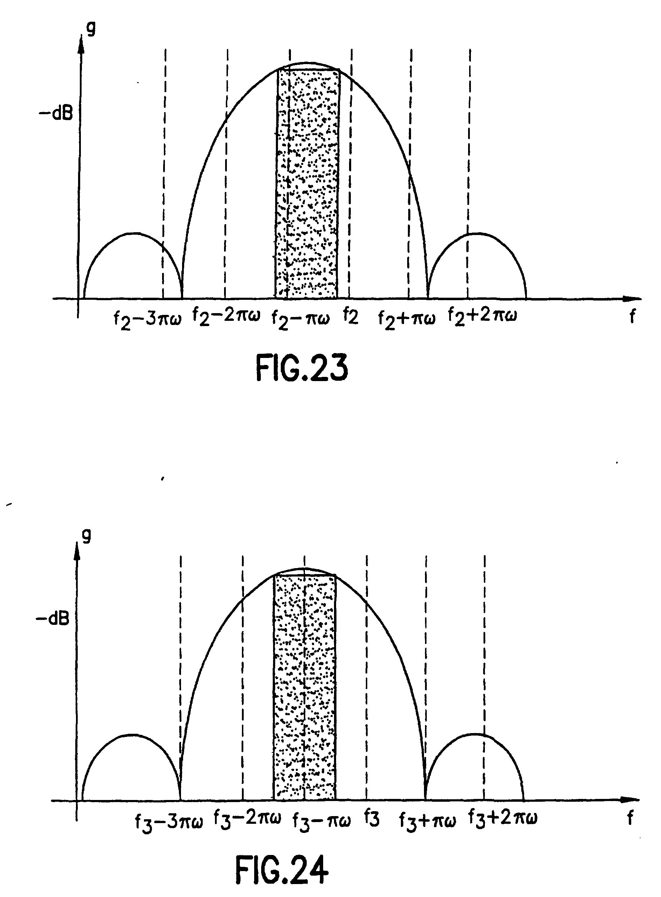

Referring now to Figure 22, it will be seen that the new frequency of oscillation $f_1$ is still within the optimal gain area and the higher and lower modes of oscillation have greater loss than the mode at $f_1$. It will be appreciated, however, that with the addition of additional weight, the frequency f will soon pass out of the optimal gain area. For example, an additional weight could shift the frequency an additional 50Khz to the position shown in Figure 23.

Referring now to Figure 23, an oscillation frequency $f_2$, which is approximately 120Khz higher than $f_0$, would move the frequency out of the optimal gain area. Nevertheless, as shown in Figure 23, the higher and lower modes of oscillation would still show greater loss than the central mode at $f_2$. Those skilled in the art will therefore appreciate that from this point onward, additional weight will raise the frequency of oscillation though an increasingly high loss area until the lower mode achieves greater gain than the central mode which is shown in Figure 24.

Turning now to Figure 24, an oscillation frequency $f_3$, which is approximately 170Khz higher than $f_0$ would cause a shift to the lower mode of oscillation $f_3-2\pi\omega$. It will be appreciated, however, that even after the mode shift, the frequency of oscillation must shift through approximately 70Khz more before oscillation of the lower mode will occur in the optimal gain area. According to the invention, therefore, it is possible to apply a phase shift of $\pi w$ to the oscillator in order to force early oscillation in the optimal gain area. For example, as shown in Figures 23 and 24 as soon as the oscillation frequency $f_2$ exhibits loss which indicates it is no longer in the optimal gain area, a phase shift of $-\pi\omega$ is applied. This causes the oscillator (delay line) to oscillate at $f_2-\pi\omega$ which, as can be seen in Figure 23, is within the optimal gain area of the frequency response curve. This phase shift will maintain the frequency of oscillation $f_3-\pi\omega$ within the optimal area even when the frequency rises to $f_3$ as shown in Figure 24. Eventually, however, additional weight on the scale will raise the frequency of oscillation to a point where the phase shifted frequency is outside the optimal gain area.

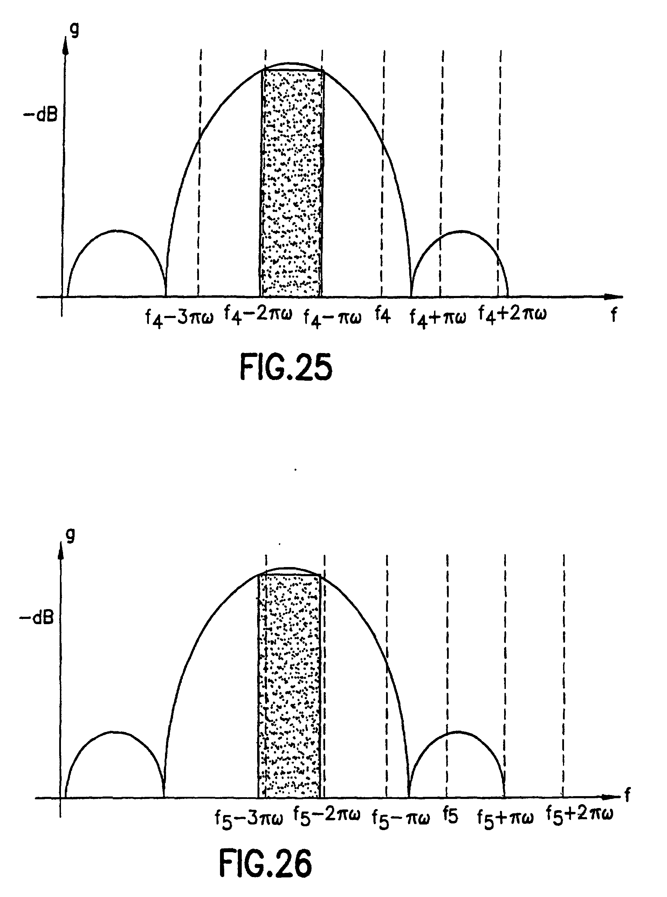

For example, as shown in Figure 25, when the frequency of oscillation $f_4$ is increased to approximately $f_0+255$Khz, the phase shifted central mode of oscillation $f_4-\pi\omega$ will exit the optimal gain area. At this point, according to the invention, the $-\pi\omega$ phase shift is discontinued and the oscillator will oscillate in its lower mode $f_4-2\pi\omega$ which is within the optimal gain area. If additional weight is added to the scale, the frequency of oscillation will continue to rise until the lower mode of oscillation passes beyond the optimal gain area as shown in Figure 26.

Referring now to Figure 26, if the frequency $f_5$ is raised to approximately $f_0+400$Khz, the lower mode oscillation $f_5-2\pi\omega$ will pass beyond the optimal gain area. According to the invention, at this point, a $-\pi\omega$ phase shift will be applied to the oscillator. This will cause the lower mode of oscillation to reside at $f_5-3\pi\omega$ which is within the optimal gain area.

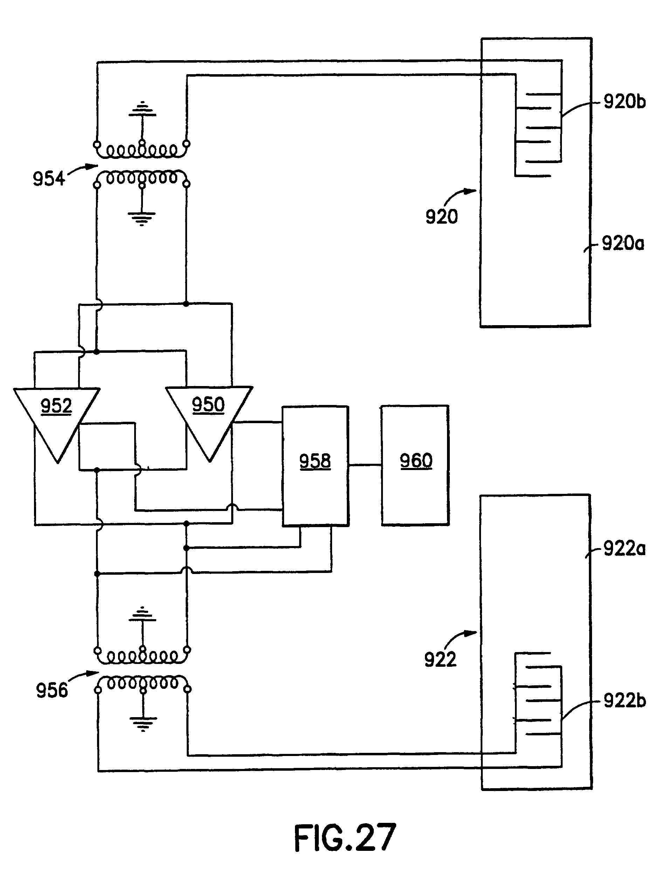

Figure 27 shows a simplified schematic diagram of a positive feedback loop with phase shifting according to the invention. Referring now to Figure 27, a simplified delay loop according to the invention includes a first transducer 920, a second transducer 922, a first differential amplifier 950, a second differential amplifier 952, a pair of matching transformers 954,956, a frequency counter and amplifier controller 958, and an output processor and weight display 960. The first transducer 920 includes a piezoelectric substrate 920a and electrodes 920b. The second transducer 922 includes a piezoelectric substrate 922a and electrodes 922b. The electrodes 920b are coupled via the matching transformer 954 to the inputs of the differential amplifiers 950, 952 in a parallel manner. The electrodes 922b are coupled to the outputs of the amplifiers 950, 952 via the matching transformer 956. As shown in Figure 27, the polarity of the outputs of the amplifier 950 is opposite to the polarity of the outputs of the amplifier 952. In addition, the enable input of each amplifier is coupled to the frequency counter and amplifier controller 958 which is also coupled to the outputs of the amplifiers. According to the invention, the amplifiers 950, 952 are turned on at one time by the frequency counter and amplifier controller 958. It will be appreciated that the phase of the outputs of the amplifiers differs by 180° or $\pi$. Thus, in order to apply or remove a phase shift, one of the amplifiers is turned off and the other is turned on. Those skilled in the art will appreciate that other circuits can be utilized to produce substantially the same type of phase shifting and that the circuit of Figure 27 is merely one example. According to the example shown in Figure 27, the frequency counter and amplifier controller 958 monitors the output of the amplifier 950 and detects when the frequency passes beyond the optimal gain area as described above, e.g., increases by 100Khz. When the frequency increases by a preselected amount, the frequency counter and amplifier controller 958 turns off amplifier 950 and turns on amplifier 952. The frequency counter and amplifier controller 958 then monitors the output of amplifier 952. After the frequency increases by an additional preselected amount, e.g. 100Khz, the frequency counter and amplifier controller 958 turns off amplifier 952 and turns on amplifier 950. While the frequency counter and amplifier controller 958 is monitoring frequencies, the frequencies are passed to the output processor and weight display 960 which analyzes the frequency of oscillation, correlates the frequency with a particular weight according to the methods described in the parent application, and displays the weight.

There have been described and illustrated herein several embodiments of an electronic weighing apparatus utilizing surface acoustic waves. While particular embodiments of the invention have been described, it is not intended that the invention be limited thereto, as it is intended that the invention be as broad in scope as the art will allow and that the specification be read likewise. Thus, while particular geometries of the base, elastic member, and load platform have been disclosed, it will be appreciated that other geometries could be utilized. Also, while particular wavelengths have been disclosed, it will be recognized that other wavelengths could be used with similar results obtained. Moreover, while particular configurations have been disclosed in reference to the amplifiers and the feedback circuits, it will be appreciated that other configurations could be used as well. Further, while particular configurations have been disclosed in reference to the location of transmitting and receiving electrodes, it will be appreciated that the respective locations of transmitters and receivers could be reversed. In addition, while several different aspects of the invention have been disclosed as solving various problems, it will be understood that the different aspects of the invention may be used in combination with each other in configurations other than those shown. Furthermore, while one embodiment of the invention discloses having an elastic member which moves relative to a base member, while another embodiment uses an elastic member in which two posts are located and moved relative to each other, it will be understood that the base member could be moved relative to the elastic member, and that the elastic member and its associated transducers can be mounted in different ways to achieve the same or similar functions provided the displacement of the transducers is related to a weight measurement.

Those skilled in the art should further appreciate that while the electronic weighing apparatus was described as having a gap between the substrates, the gap may be filled with a liquid or other material which allows free movement between the substrates but which decreases the loss in the oscillator loop. Also, if desired, the transducers can be protected against moisture by proper sealing. A dessicant can be introduced into the sealed cavity to reduce humidity fluctuations. Further, instead of utilizing a closed-loop naturally oscillating system, an open loop system could be utilized with a pulse generator, where the delay in, eg., an RF pulse can be measured and will be proportional to the displacement between the transducers. Similarly, an external oscillator could be utilized, and as the transducers move relative to each other as a result of a load, a phase shift which is proportional to the displacement will occur.

**Claims**

1. An electronic weighing apparatus, comprising:

   a) a displaceable elastic member (14) means for receiving a load and being displaced by the load such that the displacement of said elastic member means is related to the weight of the load;
   b) a first piezoelectric transducer (20) having a first surface acoustic wave (SAW) transmitter (20b);
   c) a second piezoelectric transducer (22) having a first SAW receiver (22b), said second piezoelectric transducer being mounted in close proximity to said first piezoelectric transducer with at least one of said first and second piezoelectric transducers being coupled to said elastic member means (14);
   d) a first amplifier (24) having an input and an output, said input of said first amplifier being coupled to said first SAW receiver (22b) and said output of said first amplifier being coupled to said first SAW transmitter (20b) such that said first piezoelectric transducer (20), said first amplifier (24), and said second piezoelectric transducer (22) form a first oscillator having a first output frequency; and
   e) processor means (32) coupled to said output of said first amplifier, wherein displacement of said elastic member means (14) causes a displacement of one of said first and second piezoelectric transducers (20,22) relative to the other and thereby changes said first output frequency, and said first output frequency is used by said processor means to determine an indication of the weight of the load;

   the apparatus being **characterized in that** at least one of said first and second piezoelectric transducers (20,22) comprises a substrate provided with anti-reflection structure to minimize reflection of said acoustic waves, said anti-reflection structure consisting of a surface damper (320d) on said substrate, an angled cut (120c) on an end of said substrate, or a rounded end (220c) on said substrate.

2. An apparatus according to claim 1, **characterized in that** said first SAW transmitter (20b) is located at a first end of a first substrate (20a), and said first SAW receiver (22b) is located at a second end of a second substrate (22a).

3. An apparatus according to claim 2, **characterized in that** each of said first and second substrates (20a, 22a) is substantially rectangular.

4. An apparatus according to claim 2 or 3, **characterized in that** said first piezoelectric transducer (20) generates SAWs having a first wavelength, and said first piezoelectric transducer (20) and said second piezoelectric transducer (22) are mounted with a gap (g) therebetween, said gap being less than one said first wavelength in size.

5. An apparatus according to any previous claim, **characterized in that** a base member (12) is provided and said elastic member (14) is cantilever-mounted on said base member (12) with a free end, said first piezoelectric transducer (20) is mounted on said free end, and said second piezoelectric transducer (22) is supported by said base member (12).

6. An apparatus according to any one of claims 1 to 4, **characterized in that** said elastic member (14a) has a hollowed central portion(15a), and said first and second piezoelectric transducers (20,22) are coupled to said elastic member (14a) within said hollowed central portion (15a).

7. An apparatus according to any previous claim, **characterized in that** said processor means includes frequency counter means (30) for determining said first output frequency, memory means (34) for storing a look-up table correlating frequency to weight, and display means (36) for displaying weight.

8. An apparatus according to any previous claim, **characterized in that** said first and second piezoelectric transducers (420a,420a$^1$)are on first and second substrates, and at least one of said first and second substrates is mounted on a thermal sink (421), said thermal sink preferably being mounted on a thermally insulating material (423).

9. An apparatus according to any previous claim, **characterized in that** said first and second piezoelectric transducers (620, 622) are on first and second substrates and one of said first and second transducers includes temperature sensing means (630a, 630b) on its substrate for determining the temperature of its substrate, said temperature sensing means being coupled to said processing means (32) and said temperature being used by said processing means to determine an indication of the weight of the load.

10. An apparatus according to claim 9, **characterized in that** said temperature sensing means includes a SAW transmitter (630a) and a SAW receiver (630b) which are preferably located in the same acoustic channel as said first SAW transmitter (620b).

11. An apparatus according to any previous claim, **characterized in that** phase shift means (952) are coupled to said first amplifier (950) for shifting the phase of said first output frequency by approximately 180°; and one of frequency and gain detection means (958) are coupled to said output of said first amplifier (950) and coupled to said phase shift means for activating said phase shift means upon the detection of a predetermined one of frequency and gain.

12. An apparatus according to any previous claim, **characterized in that** a third piezoelectric transducer (420a$^1$) is provided, having a second SAW transmitter (420b$^1$), a fourth piezoelectric transducer is provided having a second SAW receiver (422b$^1$), said fourth piezoelectric transducer being mounted in close proximity to said third piezoelectric transducer with at least one of said third and fourth piezoelectric transducers being coupled to said elastic member (14), and a second amplifier is provided having an input and output, said input of said second amplifier being coupled to said second receiver (422b$^1$) and said output of said amplifier being coupled to said second transmitter (420b$^1$) and to said amplifier, said third piezoelectric transducer, second amplifier, and said fourth piezoelectric transducer forming a second oscillator having a second output frequency, wherein displacement of said elastic member means (14) causes a displacement of one said third and fourth piezoelectric transducers relative to the other and thereby changes said second output frequency, and said second output frequency is used by said processor means (32) to determine said indication of the weight of the load.

13. An apparatus according to claim 12, **characterized in that** said change in said first output frequency is a first periodic function, said change in second output frequency is a second periodic function, and said first and second periodic functions have different frequencies.

14. An apparatus according to claim 12 or 13, **characterized in that** said second SAW transmitters (420b$^1$) is located at a first end of a third substrate preferably contiguous with said first substrate, and said second SAW receiver (422b$^1$) is located at a second end of a fourth substrate preferably contiguous with second substrate.

15. An apparatus according to any one of claims 12 to 14, **characterized in that** said third piezoelectric transducer (420a$^1$) generates a second surface acoustic wave having a second wavelength, which is preferably approximately 220 microns, and said third piezoelectric transducer and said fourth piezoelectric transducer are mounted with a second gap therebetween, said second gap being approximately one half to one said second wavelength in size.

16. An apparatus according to any one of claims 12 to 15, **characterized in that** said displacement of said third and fourth piezoelectric transducers relative to each other is in a direction opposite to and in an amount substantially equal to said displacement of said first and second piezoelectric transducers (420a, 422a) relative to each other, and thereby changes said second output frequency by an opposite but substantially equal amount as said change in said first output frequency, said first and second output frequencies being used by said processor means (32) to determine an indication of the weight of the load.

## Patentansprüche

1. Elektrische Wiegevorrichtung, die aufweist:

   a) verschiebbare elastische Gliedmittel (14) zum Aufnehmen einer Last, und die durch die Last so verschoben werden, daß die Verschiebung der elastischen Gliedmittel zum Gewicht der Last in Bezug steht;

   b) einen ersten piezoelektrischen Meßwandler (20), der einen ersten Sender (20b) für akustische Oberflächenwellen (SAW) hat;

   c) einen zweiten piezoelektrischen Meßwandler (22), der einen ersten SAW-Empfänger (22b) aufweist, wobei der zweite piezoelektrische Meßwandler in großer Nähe zu dem ersten piezoelektrischen Meßwandler angebracht ist, wobei wenigstens einer der ersten und zweiten piezoelektrischen Meßwandler mit den elastischen Gliedmitteln (14) verbunden ist;

   d) einen ersten Verstärker (24) mit einem Eingang und einem Ausgang, wobei der Eingang des ersten Verstärkers mit dem ersten SAW-Empfänger (22b) verbunden ist und der Ausgang des ersten Verstärkers mit dem ersten SAW-Sender (20b) so verbunden ist, daß der erste piezoelektrische Meßwandler (20), der erste Verstärker (24) und der zweite piezoelektrische Meßwandler (22) einen ersten Oszillator bilden, der eine erste Ausgangsfrequenz hat; und

   e) Prozessormittel (32), die mit dem Ausgang des ersten Verstärkers verbunden sind, wobei Verschiebung der elastischen Gliedmittel (14) eine Verschiebung von einem der ersten und zweiten piezoelektrischen Meßwandler (20, 22) relativ zum anderen bewirkt und dadurch die erste Ausgangsfrequenz ändert, und wobei die erste Ausgangsfrequenz durch die Prozessormittel verwendet wird, um eine Anzeige des Gewichtes der Last zu bestimmen;

wobei die Vorrichtung **dadurch gekennzeichnet ist, daß** wenigstens einer der ersten und zweiten piezoelektrischen Meßwandler (20, 22) ein Substrat aufweist, das mit einer Anti-Reflexionsstruktur versehen ist, um Reflexion der akustischen Wellen zu minimalisieren, wobei die Anti-Reflexionsstruktur aus einem Oberflächendämpfer (320d) auf dem Substrat, einem gewinkelten Schnitt (120c) an einem Ende des Substrats oder einem abgerundeten Ende (220c) auf dem Substrat besteht.

2. Vorrichtung nach Anspruch 1, **dadurch gekennzeichnet, daß** der erste SAW-Sender (20b) an einem ersten Ende eines ersten Substrats (20a) angeordnet ist, und daß der erste SAW-Empfänger (22b) an einem zweiten Ende eines zweiten Substrats (22a) angeordnet ist.

3. Vorrichtung nach Anspruch 2, **dadurch gekennzeichnet, daß** jedes der ersten und zweiten Substrate (20a, 22a) im wesentlichen rechteckig ist.

4. Vorrichtung nach Anspruch 2 oder 3, **dadurch gekennzeichnet, daß** der erste piezoelektrische Meßwandler (20) SAWs erzeugt, die eine erste Wellenlänge haben, und daß der erste piezoelektrische Meßwandler (20) und der zweite piezoelektrische Meßwandler (22) mit einem Zwischenraum (g) zwischen sich angebracht sind, wobei der Zwischenraum eine Größe hat, die geringer ist als eine erste Wellenlänge.

5. Vorrichtung nach einem der vorangehenden Ansprüche, **dadurch gekennzeichnet, daß** ein Basisglied (12) vorgesehen ist und das elastische Glied (14) fliegend an dem Basisglied (12) mit einem freien Ende angebracht ist, daß der erste piezoelektrische Meßwandler (20) auf dem freien Ende angebracht ist und der zweite piezoelektrische Meßwandler (22) durch das Basisglied (12) getragen wird.

6. Vorrichtung nach einem der Ansprüche 1 bis 4, **dadurch gekennzeichnet, daß** das elektrische Glied (14a) einen ausgehöhlten mittigen Bereich (15a) hat und die ersten und zweiten piezoelektrischen Meßwandler (20, 22) mit dem elastischen Glied (14a) innerhalb des ausgehöhlten mittigen Bereiches (15a) verbunden sind.

7. Vorrichtung nach einem vorangehenden Anspruch, **dadurch gekennzeichnet, daß** die Prozessormittel Frequenzzählermittel (30) zum Bestimmen der ersten Ausgangsfrequenz, Speichermittel (34) zum Speichern einer Nachschlagtabelle, die Frequenz mit Gewicht korreliert, und Anzeigemittel (36) zum Anzeigen von Gewicht einschließen.

8. Vorrichtung nach einem vorangehenden Anspruch, **dadurch gekennzeichnet, daß** die ersten und zweiten piezoelektrischen Meßwandler (420a, 420a[1]) auf ersten und zweiten Substraten angeordnet sind, und daß wenigstens eines der ersten und zweiten Substrate auf einem Kühlkörper (421) angebracht ist, wobei der Kühlkörper vorzugsweise auf einem thermisch isolierten Material (423) angebracht ist.

9. Vorrichtung nach einem vorangehenden Anspruch, **dadurch gekennzeichnet, daß** die ersten und zweiten piezoelektrischen Meßwandler (620, 622) auf ersten und zweiten Substraten angeordnet sind und einer der ersten und zweiten Meßwandler Temperaturfühlmittel (630a, 630b) auf ihrem Substrat zum Bestimmen der Temperatur ihres Substrats einschließen, wobei die Temperaturfühlmittel mit den Prozessormitteln (32) verbunden sind und die Temperatur durch die Prozessormittel verwendet wird, um eine Anzeige des Gewichts der Last zu bestimmen.

10. Vorrichtung nach Anspruch 9, **dadurch gekennzeichnet, daß** die Temperaturfühlmittel einen SAW-Sender (630a) und einen SAW-Empfänger (630b) einschließen, die bevorzugt in demselben akustischen Kanal wie der erste SAW-Sender (620b) angeordnet sind.

11. Vorrichtung nach einem vorangehenden Anspruch, **dadurch gekennzeichnet, daß** Phasenverschiebungsmittel (952) mit dem ersten Verstärker (950) zum Verschieben der Phase der ersten Ausgangsfrequenz um ungefähr 180° verbunden sind; und daß eines von Frequenz- und Verstärkungsdetektionsmitteln (958) mit dem Ausgang des ersten Verstärkers (950) verbunden ist und mit den Phasenverschiebungsmitteln verbunden ist, um die Phasenverschiebungsmittel zu aktivieren, wenn eine vorbestimmte Frequenz oder Verstärkung festgestellt wird.

12. Vorrichtung nach einem vorangehenden Anspruch, **dadurch gekennzeichnet, daß** eine dritter piezoelektrischer Meßwandler (420a[1]) vorgesehen ist, der einen zweiten SAW-Sender (420b[1]) hat, daß ein vierter piezoelektrischer Meßwandler vorgesehen ist, der einen zweiten SAW-Empfänger (422b[1]) hat, wobei der vierte piezoelektrische Meßwandler in großer Nähe zum dritten piezoelektrischen Meßwandler angebracht ist, wobei wenigstens einer der dritten und vierten piezoelektrischen Meßwandler mit dem elastischen Glied (14) verbunden ist, und daß ein zweiter Verstärker vorgesehen ist, der einen Eingang und einen Ausgang aufweist, wobei der Eingang des zweiten Verstärkers mit dem zweiten Empfänger (422b[1]) verbunden ist und der Ausgang des Verstärkers mir dem zweiten Sender (420b[1]) und mit dem Verstärker verbunden ist, wobei der dritte piezoelektrische Meßwandler, der zweite Verstärker und der vierte piezoelektrische Meßwandler einen zweiten Oszillator bilden, der eine zweite Ausgangsfrequenz hat, wobei Verschiebung der elastischen Gliedmittel (14) eine Verschiebung eines der dritten und vierten piezoelektrischen Meßwandler relativ zum anderen bewirkt und dadurch die zweite Ausgangsfrequenz ändert, und daß die zweite Ausgangsfrequenz durch die Prozessormittel (32) verwendet wird, um die Anzeige des Gewichtes der Last zu bestimmen.

13. Vorrichtung nach Anspruch 12, **dadurch gekennzeichnet, daß** die Änderung in der ersten Ausgangsfrequenz eine erste periodische Funktion ist, daß die Änderung in der zweiten Ausgangsfrequenz eine zweite periodische Funktion ist, und daß die ersten und zweiten periodischen Funktionen unterschiedliche Frequenzen haben.

14. Vorrichtung nach Anspruch 12 oder 13, **dadurch gekennzeichnet, daß** der zweite SAW-Sender (420b[1]) an einem ersten Ende des dritten Substrats im wesentlichen angrenzend an oder zusammenhängend mit dem ersten Substrat angeordnet ist und der zweite SAW-Empfänger (422b[1]) an einem zweiten Ende eines vierten Substrats vorzugsweise zusammenhängend mit oder angrenzend an das zweite Substrat angeordnet ist.

15. Vorrichtung nach einem der Ansprüche 12 bis 14, **dadurch gekennzeichnet, daß** der dritte piezoelektrische Meßwandler (420a[1]) eine zweite akustische Oberflächenwelle erzeugt, die eine zweite Wellenlänge, die wenigstens ungefähr 220 Mikron beträgt, und daß der dritte piezoelektrische Meßwandler und der vierte piezoelektrische Meßwandler mit einem zweiten Zwischenraum zwischen sich angebracht sind, wobei der zweite Zwischenraum ungefähr halb so groß bis gleich groß wie die zweite Wellenlänge ist.

16. Vorrichtung nach einem der Ansprüche 12 bis 15, **dadurch gekennzeichnet, daß** die Verschiebung der dritten und vierten piezoelektrischen Meßwandler relativ zueinander in einer Richtung entgegengesetzt zu der Verschiebung der ersten und zweiten piezoelektronischem Meßwandler (420a, 422a) relativ zueinander ist, und in einem Ausmaß erfolgt, das im wesentlichen gleich derselben ist, und daß dadurch die zweite Ausgangsfrequenz sich um eine entgegengesetzte aber im Wesentlichen gleiche Größe ändert wie die Änderung in der ersten Ausgangsfrequenz, wobei die ersten und zweiten Ausgangsfrequenzen durch die Prozessormittel (32) verwendet werden, um die Anzeige des Gewichts der Last zu bestimmen.

## Revendications

1. Appareil de pesée électronique comprenant:

   a) des moyens formant élément élastique déplaçable (14) servant à recevoir une charge et déplacés par la charge de telle sorte que le déplacement desdits moyens formant élément élastique est associé au poids de la charge;
   b) un premier transducteur piézoélectrique (20) possédant un premier émetteur (20b) à ondes acoustiques de surface (SAW);
   c) un second transducteur piézoélectrique (22) possédant un premier récepteur SAW (22b), ledit second transducteur piézoélectrique étant monté à proximité directe dudit premier transducteur piézoélectrique, au moins l'un desdits premier et second transducteurs piézoélectriques étant couplé auxdits moyens formant élément élastique (14);
   d) un premier amplificateur (24) possédant une entrée et une sortie, ladite entrée dudit premier amplificateur étant couplée audit premier récepteur SAW (22b) et ladite sortie dudit premier amplificateur étant couplée audit premier émetteur SAW (20b) de telle sorte que ledit premier transducteur piézoélectrique (20), ledit premier amplificateur (24) et ledit second transducteur piézoélectrique (21) forment un premier oscillateur possédant une première fréquence de sortie; et
   e) des moyens formant processeur (32) couplés à ladite sortie dudit premier amplificateur, dans lequel le déplacement desdits moyens formant élément élastique (14) provoque un déplacement de l'un desdits premier et second transducteurs piézoélectriques (20, 22) par rapport à l'autre et de ce fait modifie ladite première fréquence de sortie, et ladite première fréquence de sortie est utilisée par lesdits moyens formant processeur pour déterminer une indication du poids de la charge;

   l'appareil étant **caractérisé en ce qu'**au moins l'un desdits premier et second transducteurs piézoélectriques (20, 22) comprend un substrat pourvu d'une structure antireflet pour réduire la réflexion desdites ondes acoustiques, ladite structure antireflet étant constituée par un dispositif d'atténuation de surface (320d) situé sur ledit substrat, une coupe oblique (120c) sur une extrémité dudit substrat, ou une extrémité arrondie (220c) sur ledit substrat.

2. Appareil selon la revendication 1, **caractérisé en ce que** ledit premier émetteur SAW (20b) est situé sur une première extrémité d'un premier substrat (20a) et ledit premier récepteur SAW (22b) est situé sur une seconde extrémité d'un second substrat (22a).

3. Appareil selon la revendication 2, **caractérisé en ce que** chacun desdits premier et second substrats (20a, 22a) est globalement rectangulaire.

4. Appareil selon la revendication 2 ou 3, **caractérisé en ce que** ledit premier transducteur piézoélectrique (20) génère des ondes SAW ayant une première longueur d'onde, et ledit premier transducteur piézoélectrique (20) et ledit second transducteur piézoélectrique (22) sont montés en étant séparés par un interstice (g), ledit interstice ayant une taille inférieure à ladite première longueur d'onde.

5. Appareil selon l'une quelconque des revendications précédentes, **caractérisé en ce qu'**un élément de base (12) est prévu et que ledit élément élastique (14) est monté en porte-à-faux sur ledit élément de base (12) avec une extrémité libre, ledit premier transducteur piézoélectrique (20) est monté sur ladite extrémité libre, ledit second transducteur piézoélectrique (22) est supporté par ledit élément de base (12).

6. Appareil selon l'une quelconque des revendications 1 à 4, **caractérisé en ce que** ledit élément élastique (14a) possède une partie centrale évidée (15a), et lesdits premier et second transducteurs piézoélectriques (20, 22) sont couplés audit élément élastique (14a) dans ladite partie centrale évidée (15a).

7. Appareil selon l'une quelconque des revendications précédentes, **caractérisé en ce que** lesdits moyens formant processeur incluent des moyens formant compteur de fréquence (30) pour déterminer ladite première fréquence de sortie, des moyens de mémoire (34) pour mémoriser une table de consultation mettant en corrélation la fréquence et le poids, et des moyens d'affichage (36) pour afficher le poids.

8. Appareil selon l'une quelconque des revendications précédentes, **caractérisé en ce que** lesdits premier et second transducteurs piézoélectriques

(420a, 420a[1]) sont montés sur des premier et second substrats, et au moins l'un desdits premier et second substrats est monté sur un puits thermique (421), ledit puits thermique étant de préférence monté sur un matériau thermiquement isolant (423).

**9.** Appareil selon l'une quelconque des revendications précédentes, **caractérisé en ce que** lesdits premier et second transducteurs piézoélectriques (620, 622) sont situés sur des premier et second substrats, et l'un desdits premier et second transducteurs piézoélectriques inclue des moyens de détection de température (630a, 630b) sur son substrat pour déterminer la température de son substrat, lesdits moyens de détection de température étant couplés auxdits moyens de traitement (32) et ladite température étant utilisée par lesdits moyens de traitement pour déterminer une indication du poids de la charge.

**10.** Appareil selon la revendication 9, **caractérisé en ce que** lesdits moyens de détection de température incluent un émetteur SAW (630a) et un récepteur SAW (630b) qui sont de préférence situés dans le même canal acoustique que ledit premier émetteur SAW (620b).

**11.** Appareil selon l'une quelconque des revendications précédentes, **caractérisé en ce que** des moyens de déphasage (952) sont couplés audit premier amplificateur (950) pour décaler d'environ 180° la phase de ladite première fréquence de sortie; et l'un des moyens (958) de détection de la fréquence et du gain est couplé à ladite sortie dudit premier amplificateur (950) et est couplé auxdits moyens de déphasage pour activer lesdits moyens de déphasage lors de la détection de l'un prédéterminé de la fréquence et du gain.

**12.** Appareil selon l'une quelconque des revendications précédentes, **caractérisé en ce qu'**il est prévu un troisième transducteur piézoélectrique (420a[1]) possédant un émetteur SAW (420b[1]), il est prévu un quatrième transducteur piézoélectrique possédant un récepteur SAW (422b[1]), ledit quatrième transducteur piézoélectrique étant monté à proximité directe dudit troisième transducteur piézoélectrique, au moins l'un desdits troisième et quatrième transducteurs piézoélectriques étant couplé audit élément élastique (14), et il est prévu un second amplificateur possédant une entrée et une sortie, ladite entrée dudit second amplificateur étant couplée audit second récepteur (422b[1]) et ladite sortie dudit amplificateur étant couplée audit second émetteur (420b[1]) et audit amplificateur, ledit troisième transducteur piézoélectrique, ledit second amplificateur et ledit quatrième transducteur piézoélectrique formant un second oscillateur possédant une seconde fréquence de sortie, le déplacement desdits moyens formant élément élastique (14) provoquant un déplacement de l'un desdits troisième et quatrième transducteurs piézoélectriques l'un par rapport à l'autre et modifiant de ce fait ladite seconde fréquence de sortie, et ladite seconde fréquence de sortie étant utilisée par lesdits moyens formant processeur (32) pour déterminer ladite indication du poids de la charge.

**13.** Appareil selon la revendication 12, **caractérisé en ce que** ladite variation de ladite première fréquence de sortie est une première fonction périodique, ladite variation de la seconde fréquence de sortie est une seconde fonction périodique et lesdites première et seconde fonctions périodiques possèdent des fréquences différentes.

**14.** Appareil selon la revendication 12 ou 13, **caractérisé en ce que** ledit second émetteur SAW (420b[1]) est situé à une première extrémité d'un troisième substrat, de préférence contigu audit premier substrat, et ledit second récepteur SAW (422b[1]) étant situé à une seconde extrémité d'un quatrième substrat de préférence contigu au second substrat.

**15.** Appareil selon l'une quelconque des revendications 12 et 14, **caractérisé en ce que** ledit troisième transducteur piézoélectrique (420a[1]) produit une seconde onde acoustique de surface possédant une seconde longueur d'onde, qui est de préférence égale à environ 220 micromètres, et ledit troisième transducteur piézoélectrique et ledit quatrième transducteur piézoélectrique sont montés en étant séparés par un second interstice, ledit second interstice ayant une taille égale approximativement à la moitié de ladite seconde longueur d'onde.

**16.** Appareil selon l'une quelconque des revendications 12 à 15, **caractérisé en ce que** ledit déplacement desdits troisième et quatrième transducteurs piézoélectriques l'un par rapport à l'autre s'effectue dans une direction opposée, et sur une distance essentiellement égale audit déplacement desdits premier et second transducteurs piézoélectriques (420a, 422a) l'un par rapport à l'autre, et de ce fait modifie ladite seconde fréquence de sortie, d'une quantité opposée, mais essentiellement égale, à ladite variation de ladite première fréquence de sortie, lesdites première et seconde fréquences de sortie étant utilisées par lesdits moyens formant processeur (32) pour déterminer une indication du poids de la charge.

FIG.1

EP 0 937 232 B1

FIG.1a

**FIG.2**

**FIG.2a**

**FIG.2b**

FIG.3

FIG.3a

FIG.3b

FIG.4

FIG.4a

FIG.4b

FIG.5

FIG.7

FIG.6

120 120a

120c

120b 126

## FIG.8a

220b 226 220a

220c

220

## FIG.8b

320b 320a 326 320d

320c

320

## FIG.8c

322c

322d

322a

322

320b

322b

320

322b

320a

320

320d

320c

## FIG.9

FIG.10

FIG.10a

FIG.10b

EP 0 937 232 B1

FIG.11

FIG.11a

FIG.11b

EP 0 937 232 B1

FIG.12

FIG.13

FIG.14

EP 0 937 232 B1

720

722

730

722b

722a

760

720a

750

720b

**FIG.15**

720

730

720a

720b

**FIG.16**

722

722b

722a

**FIG.17**

EP 0 937 232 B1

820 → 822 820 822

830 822b

820a 822a 820a 822a

830 822b

820b 832 820b 832

**FIG.18** **FIG.19** **FIG.20**

FIG.21

FIG.22

FIG.23

FIG.24

**FIG.25**

**FIG.26**

FIG.27